# EUROPEAN PATENT SPECIFICATION

(11) **EP 2 371 441 B1**
(45) Date of publication and mention of the grant of the patent: **18.07.2012**
(21) Application number: 11250159.8
(22) Date of filing: 11.02.2011
(51) Int. Cl.: B01D 46/24

(54) **Exhaust gas purifying device**
Abgasreinigungsvorrichtung
Dispositif de purification des gaz d'échappement

(30) Priority: 16.02.2010 JP 2010030844
(43) Date of publication of application: 05.10.2011
(73) Proprietor: NGK Insulators, Ltd., Nagoya-City, Aichi Pref. 467-8530 (JP)
(72) Inventor: Goto, Chika, Nagoya City Aichi-ken, 467-8530 (JP); Yamashita, Masataka, Nagoya City Aichi-ken, 467-8530 (JP); Miyairi, Yukio, Nagoya City Aichi-ken, 467-8530 (JP)
(74) Representative: Paget, Hugh Charles Edward

(56) References cited:
- EP-A1- 1 561 509
- EP-A1- 2 236 783
- EP-A2- 1 985 352
- EP-A2- 2 002 879
- WO-A1-01/12961

## Description

### BACKGROUND OF THE INVENTION

### Field of the Invention

The present invention relates to an exhaust gas purifying device. More particularly, it relates to an exhaust gas purifying device which can efficiently remove fine particles in an exhaust gas discharged from a direct injection type gasoline engine, has a less increase of pressure drop, and can purify the exhaust gas containing CO, HC and NOx with a high efficiency immediately after the start of the engine.

### Description of the Related Art

From the viewpoints of terrestrial environment protection and resource saving, lowering of fuel expenses of vehicles is demanded. As to a gasoline engine mainly for use in a car, direct fuel injection is promoted to improve fuel economy.

Heretofore, in the gasoline engine, a suction port fuel injection system has been employed. Therefore, soot (a particulate matter: PM) is less generated, and any problem hardly occurs. However, a gasoline engine of the direct fuel injection system has a larger amount of the PM as compared with the engine of the suction port fuel injection system and, accordingly, requires such a countermeasure that the generated PM is not discharged to atmospheric air.

On the other hand, as a collecting filter for removing the particulate matter discharged from a diesel engine, a honeycomb structure is used. As the honeycomb structure for use as the particulate matter collecting filter, a plugged honeycomb structure having plugged portions at predetermined positions in both end faces thereof is used (e.g., see Patent Document 1). Here, the plugged honeycomb structure comprises a honeycomb structure portion including porous partition walls arranged to form a plurality of cells which become through channels of a fluid (an exhaust gas and a purified gas) and an outer peripheral wall positioned at an outermost periphery thereof; and plugged portions arranged in 'open frontal areas of predetermined cells in an end face of the honeycomb structure portion on an inlet side of the fluid (the exhaust gas)' and 'open frontal areas of remaining cells in an end face of the honeycomb structure portion on an outlet side of the fluid (the purified gas)' in the honeycomb structure portion. According to such a honeycomb structure, the exhaust gas flows into the cells through the end face of the honeycomb structure on the inlet side of the exhaust gas, the exhaust gas which has flowed into the cells passes through the partition walls, and the exhaust gas (the purified gas) passing through the partition walls is discharged from the honeycomb structure through the end face thereof on the outlet side of the exhaust gas. Moreover, when the exhaust gas passes through the partition walls, the PM contained in the exhaust gas is collected by the partition walls, and the exhaust gas becomes the purified gas.

Consequently, there is suggested a method using the plugged honeycomb structure for use in removing the particulate matter discharged from the diesel engine as described above, when removing the particulate matter discharged from the gasoline engine.
[Patent Document 1] JP-A-2003-254034

### SUMMARY OF THE INVENTION

Heretofore, a three way catalyst converter, an NOx adsorber reduction catalyst or the like has been used to treat an exhaust gas discharged from a gasoline engine. Therefore, it is considered that when a plugged honeycomb structure is mounted in an exhaust system, a pressure drop of the exhaust system increases, thereby causing a problem such as decrease of an engine output.

To solve the problem, it is considered that the plugged honeycomb structure having a three way catalyst loaded onto partition walls thereof is replaced with the above three way catalyst converter, NOx adsorber reduction catalyst or the like. However, when a necessary amount of the three way catalyst is loaded onto the partition walls of the plugged honeycomb structure, a problem occurs that the pressure drop increases owing to pores of partition walls being closed.

Moreover, in the plugged honeycomb structure, the open frontal area of one end of each predetermined cell and the open frontal area of the other end of each remaining cell are plugged with a plugging material, but such plugged portions are formed to increase heat capacity of both the ends of the plugged honeycomb structure. Therefore, there is a problem that much time is required for temperature rise of both the ends during warm-up immediately after the start of the engine. That is, much time is required for reaching the temperature necessary for activating the catalyst loaded onto both the ends, which causes a problem that a purifying ratio is not sufficient. Examples of a method of solving the problem that much time is required for the temperature rise supposedly include a method of increasing the amount of the catalyst to be loaded. However, when the amount of the catalyst is increased, the amount of a noble metal as the catalyst to be used is increased, which causes problems such as increase of costs and waste of resources. On the other hand, heat efficiency of the engine is increased for a purpose of improving fuel economy of a car. However, when the heat efficiency of the engine is increased, the temperature of the exhaust gas discharged from the engine lowers, which causes a problem that much time is further required for the temperature rise.

Furthermore, the gasoline engine is different from the diesel engine in the fuel for use, and hence the amount of the PM in the exhaust gas varies as described above. Additionally, the particle diameter, shape and components of the PM in the exhaust gas also vary. Therefore, the gasoline engine is different from the diesel engine also in the optimum constitution (characteristics) of a honeycomb structure for collecting the PM in the exhaust gas.

The present invention has been developed in view of such problems of the conventional technology, and an object thereof is to provide an exhaust gas purifying device which can efficiently remove fine particles in an exhaust gas discharged from a direct injection type gasoline engine, has a less increase of pressure drop, and can purify the exhaust gas containing CO, HC and NOx with a high efficiency immediately after the start of the engine.

According to the present invention, an exhaust gas purifying device is provided according to claim 1.

In the exhaust gas purifying device according to claim 1, preferably the amount of the three way catalyst loaded per unit volume of the inflow side region of the first one-side-plugged honeycomb structure is from 100 to 400 g/L.

In the exhaust gas purifying device according to claim 1 or 2, preferably the amount of the catalyst loaded per unit volume of the outflow side region of the first one-side-plugged honeycomb structure and the second one-side-plugged honeycomb structure is 60 g/L or less.

In the exhaust gas purifying device according to any one of claims 1 to 3, preferably in the first honeycomb base material of the first one-side-plugged honeycomb structure, the thickness of the partition walls is from 50.8 to 254 µm, the cell density is from 32 to 186 cells/cm², the porosity of the partition walls is from 35 to 70%, and the value of a ratio of a length L₁ along the central axis direction with respect to a diameter D₁ of the first inflow side end face is from 0.5 to 1.5.

In the exhaust gas purifying device according to any one of claims 1 to 4, preferably in the second honeycomb base material of the second one-side-plugged honeycomb structure, the thickness of the partition walls is from 50.8 to 254 µm, the cell density is from 32 to 186 cells/cm², the porosity of the partition walls is from 35 to 70%, and the value of a ratio of a length L₂ along the central axis direction with respect to a diameter D₂ of the second inflow side end face is from 0.1 to 1.0.

In the exhaust gas purifying device according to any one of claims 1 to 5, preferably the distance between the first one-side-plugged honeycomb structure and the second one-side-plugged honeycomb structure is from 1 to 20 mm.

In the exhaust gas purifying device according to any one of claims 1 to 6, preferably the first plugged portions of the first one-side-plugged honeycomb structure are arranged to alternately plug adjacent cells, or when a cell group constituted of a plurality of adjacent cells is a unit cell group, the first plugged portions are arranged to alternately plug adjacent unit cell groups.

In the exhaust gas purifying device according to any one of claims 1 to 7, preferably the second plugged portions of the second one-side-plugged honeycomb structure are arranged to alternately plug adjacent cells, or when a cell group constituted of a plurality of adjacent cells is a unit cell group, the second plugged portions are arranged to alternately plug adjacent unit cell groups.

An exhaust gas purifying device of the present invention comprises a first one-side-plugged honeycomb structure and a second one-side-plugged honeycomb structure both including a honeycomb base material having porous partition walls arranged to form a plurality of cells which extend through the honeycomb base material from an inflow side end face to an outflow side end face and become through channels of a fluid and plugged portions arranged to plug open frontal areas of cells in a part of the outflow side end face of this honeycomb base material, whereby fine particles in an exhaust gas discharged from a direct injection type gasoline engine can efficiently be removed. Moreover, since the first one-side-plugged honeycomb structure and second one-side-plugged honeycomb structure include formed cells having both opened ends (i.e., through holes extending through each structure from the inflow side end face to the outflow side end face), the device has a less increase of pressure drop. Moreover, the first one-side-plugged honeycomb structure is disposed in the can member on an inflow port side so that the first inflow side end face faces the inflow port side of the can member. Therefore, a temperature of the first one-side-plugged honeycomb structure can easily be raised by heat of the exhaust gas, as compared with a case where the plugged portions are arranged in the open frontal areas of the cells in the first inflow side end face. In consequence, the three way catalyst loaded onto the first one-side-plugged honeycomb structure is activated in a short time immediately after start of the engine. Consequently, the exhaust gas containing CO, HC and NOx can be purified with a high efficiency immediately after the start of the engine.

### BRIEF DESCRIPTION OF THE DRAWINGS

Fig. 1 is an exemplary diagram showing a section of one embodiment of an exhaust gas purifying device of the present invention parallel to a central axis thereof;
Fig. 2 is a perspective view schematically showing a first one-side-plugged honeycomb structure constituting the embodiment of the exhaust gas purifying device of the present invention;
Fig. 3 is a plan view schematically showing a first outflow side end face of the first one-side-plugged honeycomb structure constituting the embodiment of the exhaust gas purifying device of the present invention;
Fig. 4 is a plan view schematically showing a first outflow side end face of a first one-side-plugged honeycomb structure constituting another embodiment of the exhaust gas purifying device of the present invention;
Fig. 5 is a plan view schematically showing a first outflow side end face of a first one-side-plugged honeycomb structure constituting still another embodiment of the exhaust gas purifying device of the present invention;
Fig. 6 is a plan view schematically showing a first outflow side end face of a first one-side-plugged honeycomb structure constituting a further embodiment of the exhaust gas purifying device of the present invention;
Fig. 7 is a perspective view schematically showing a second one-side-plugged honeycomb structure constituting the embodiment of the exhaust gas purifying device of the present invention; and
Fig. 8 is a plan view schematically showing a second outflow side end face of the second one-side-plugged honeycomb structure constituting the embodiment of the exhaust gas purifying device of the present invention.

### DESCRIPTION OF THE PREFERRED EMBODIMENT

Hereinafter, an embodiment of the present invention will be described, but it should be understood that the present invention is not limited to the following embodiment and includes appropriate change, modification or the like applied to the following embodiment based on ordinary knowledge of a person with ordinary skill in the art without departing from the scope of the present invention.

### [1] Exhaust Gas Purifying Device:

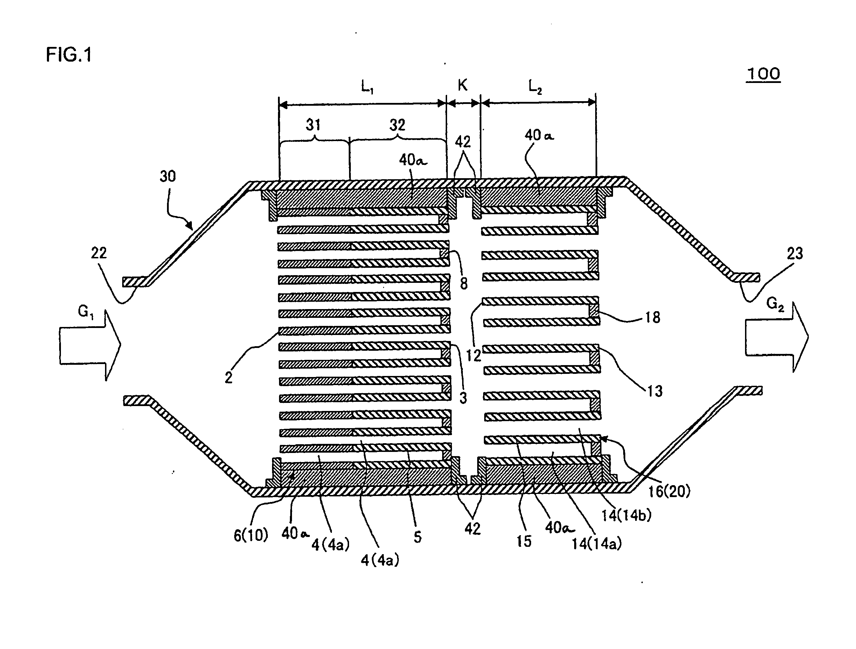

As shown in Fig. 1, an exhaust gas purifying device 100 of the present invention comprises a first one-side-plugged honeycomb structure 10 including a first honeycomb base material 6 having porous partition walls 5 arranged to form a plurality of cells 4 which extend through the first honeycomb base material from a first inflow side end face 2 to a first outflow side end face 3 and become through channels of a fluid, first plugged portions 8 arranged to plug open frontal areas of cells 4a in a part of the first outflow side end face 3 of the first honeycomb base material 6, and a three way catalyst loaded onto the first honeycomb base material 6, all the cells 4 in the first inflow side end face 2 being opened; a second one-side-plugged honeycomb structure 20 including a second honeycomb base material 16 having porous partition walls 15 arranged to form a plurality of cells 14 which extend through the second honeycomb base material from a second inflow side end face 12 to a second outflow side end face 13 and become through channels of the fluid, and second plugged portions 18 arranged to plug open frontal areas of the cells 14a in a part of the second outflow side end face 13 of the second honeycomb base material 16, all the cells 14 in the second inflow side end face 12 being opened; and a can member 30 containing the first one-side-plugged honeycomb structure 10 and the second one-side-plugged honeycomb structure 20 and having an inflow port 22 through which an exhaust gas G₁ flows into the can member and an outflow port 23 through which a purified exhaust gas G₂ flows out of the can member.

The first one-side-plugged honeycomb structure 10 is disposed in the can member 30 on an inflow port 22 side thereof so that the first inflow side end face 2 faces the inflow port 22 side of the can member 30, the second one-side-plugged honeycomb structure 20 is disposed in the can member 30 on an outflow port 23 side thereof so that the second outflow side end face 13 faces the outflow port 23 side of the can member 30. Moreover, the first one-side-plugged honeycomb structure 10 includes two regions, i.e., an inflow side region 31 which is a region on an inflow side of the fluid and an outflow side region 32 which is a region on an outflow side of the fluid, the inflow side region 31 of the first one-side-plugged honeycomb structure 10 is a region from the first inflow side end face 2 to a position where a distance from the first inflow side end face 2 is from 10 to 70% of a length of the first one-side-plugged honeycomb structure 10 along a central axis direction. Furthermore, the three way catalyst is loaded onto the partition walls 5 in the inflow side region 31 and any catalyst is not loaded onto the outflow side region 32 and the second one-side-plugged honeycomb structure 20, or the catalyst is loaded onto the outflow side region and the second one-side-plugged honeycomb structure and the amount of the catalyst to be loaded per unit volume is smaller than the amount of the three way catalyst to be loaded per unit volume of the partition walls 5 in the inflow side region 31. Fig. 1 is an exemplary diagram showing a section of one embodiment of an exhaust gas purifying device of the present invention parallel to a central axis thereof.

The exhaust gas purifying device 100 of the present embodiment comprises the first one-side-plugged honeycomb structure 10 including the first honeycomb base material 6 having the porous partition walls 5 arranged to form the plurality of cells 4 which extend through the honeycomb base material from the first inflow side end face 2 to the first outflow side end face 3 and become the through channels of the fluid, and the first plugged portions 8 arranged to plug the open frontal areas of the cells 4a in a part of the first outflow side end face 3 of the first honeycomb base material 6; and the second one-side-plugged honeycomb structure 20 including the second honeycomb base material 16 having the porous partition walls 15 arranged to form the plurality of cells 14 which extend through the honeycomb base material from the second inflow side end face 12 to the second outflow side end face 13 and become the through channels of the fluid, and the second plugged portions 18 arranged to plug the open frontal areas of the cells 14a in a part of the second outflow side end face 13 of the second honeycomb base material 16, whereby fine particles in an exhaust gas discharged from a direct injection type gasoline engine can efficiently be removed.

That is, since the first one-side-plugged honeycomb structure 10 and the second one-side-plugged honeycomb structure 20 include the formed cells 4 (4b) and 14 (14b) having both the opened ends (i.e., through holes extending through the structures from the inflow side end faces 2 and 12 to the outflow side end faces 3 and 13), respectively, a part of a particulate matter contained in the exhaust gas discharged from the direct injection type gasoline engine passes through the structure. However, even if the particulate matter contained in the exhaust gas is not completely removed, the amount of the particulate matter contained in the exhaust gas discharged from the gasoline engine is much smaller than that of the particulate matter contained in the exhaust gas discharged from a diesel engine. Therefore, when the first one-side-plugged honeycomb structure 10 and the second one-side-plugged honeycomb structure 20 are used together, an only remarkably small amount of the particulate matter is not removed and is discharged. It is to be noted that when the first one-side-plugged honeycomb structure 10 and the second one-side-plugged honeycomb structure 20 are used together, the exhaust gas can be purified with a high efficiency.

Moreover, in the exhaust gas purifying device 100 of the present embodiment, both ends of the cells 4 (4b) and 14 (14b) in a part of each of the first one-side-plugged honeycomb structure 10 and the second one-side-plugged honeycomb structure 20 are opened (i.e., through holes extending through the structures from the inflow side end faces 2 and 12 to the outflow side end faces 3 and 13 are formed), whereby the device has a less increase of pressure drop. Moreover, the first one-side-plugged honeycomb structure 10 is disposed in the can member 30 on the inflow port 22 side so that the first inflow side end face 2 faces the inflow port side of the can member 30. Therefore, a temperature of the first one-side-plugged honeycomb structure 10 on the inflow side can easily be raised by heat of the heat of the exhaust gas, as compared with a case where the plugged portions are arranged in the open frontal areas of the cells 4 in the first inflow side end face 2 of the first one-side-plugged honeycomb structure 10. In consequence, the three way catalyst loaded onto the structure is activated in a short time immediately after the start of the engine. Consequently, the exhaust gas containing CO, HC and NOx can be purified with a high efficiency immediately after the start of the engine.

### [1-1] First One-Side-Plugged Honeycomb Structure:

In the first one-side-plugged honeycomb structure 10, the first honeycomb base material 6 has a honeycomb shape including the porous partition walls 5 arranged to form the plurality of cells 4 which extend through the first honeycomb base material from the first inflow side end face 2 to the first outflow side end face 3 and become the through channels of the fluid. Moreover, the first one-side-plugged honeycomb structure 10 has all the opened cells 4 in the first inflow side end face 2, i.e., the open frontal areas of all the cells 4 in the first inflow side end face 2 are not plugged. Therefore, it is possible to avoid increase of a heat capacity owing to the plugged portions formed in the first inflow side end face 2, and the temperature rises to a catalyst activating temperature in an early stage after the start of the engine. Therefore, the exhaust gas containing CO, HC and NOx can be purified with the high efficiency immediately after the start of the engine.

The thickness of the partition walls 5 is preferably from 50.8 to 254 µm, further preferably from 50.8 to 200 µm, especially preferably from 50.8 to 125 µm. If the thickness is less than 50.8 µm, the strength of the first one-side-plugged honeycomb structure 10 might deteriorate. On the other hand, if the thickness exceeds 254 µm, the pressure drop during the passing of the exhaust gas through the cells might become large. The thickness of the partition wall 5 is a value measured by a method of observing the section of the partition wall parallel to the central axis by a microscope.

The cell density of the first honeycomb base material 6 (the first one-side-plugged honeycomb structure 10) (i.e., the cell density of the section of the first honeycomb base material 6 perpendicular to the central axis thereof) is preferably from 32 to 186 cells/cm², further preferably from 50 to 150 cells/cm², especially preferably from 55 to 100 cells/cm². If the cell density is less than 32 cells/cm², the strength of the first one-side-plugged honeycomb structure 10 might deteriorate. On the other hand, if the cell density exceeds 186 cells/cm², the pressure drop might become large.

The porosity of the partition walls 5 is preferably from 35 to 70%, further preferably from 38 to 60%, especially preferably from 40 to 50%. If the porosity is less than 35%, the pressure drop might increase. On the other hand, if the pressure drop exceeds 70%, the first one-side-plugged honeycomb structure 10 becomes brittle and is easily lost sometimes. The porosity of the partition walls 5 is a value measured by a mercury porosimeter.

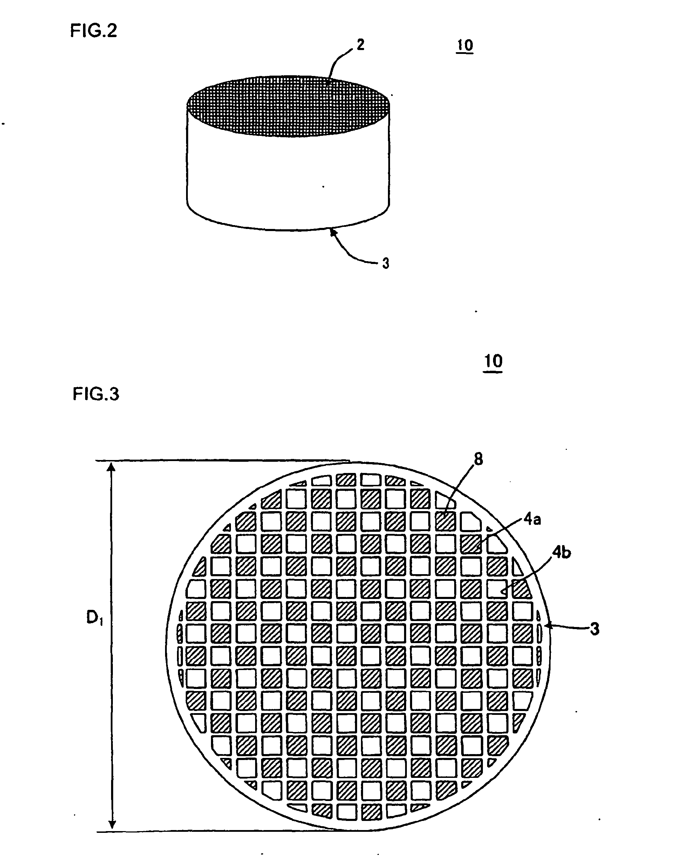

A value of a ratio of a length L₁ of the first honeycomb base material 6 along a central axis direction with respect to a diameter D₁ (see Fig. 3) of the first inflow side end face 2 is preferably from 0.5 to 1.5, further preferably from 0.8 to 1.5, especially preferably from 1.0 to 1.3. If the value is less than 0.5, the amount of the exhaust gas passing through the partition walls 5 decreases, and hence a collecting efficiency of the particulate matter might lower. On the other hand, if the value exceeds 1.5, the pressure drop in the through channels of the exhaust gas increases. Therefore, the whole pressure drop of the present device might increase to lower an engine output.

The average pore diameter of the partition walls 5 is preferably from 5 to 30 µm, further preferably from 10 to 25 µm. When the average pore diameter is less than 5 µm, the pressure drop might increase even in a case where a less amount of the particulate matter is deposited. On the other hand, if the average pore diameter exceeds 30 µm, the first one-side-plugged honeycomb structure 10 becomes brittle and is easily lost sometimes, and a particulate matter collecting performance deteriorates sometimes. The average pore diameter of the partition walls 5 is a value measured by the mercury porosimeter.

The inflow side region 31 of the first one-side-plugged honeycomb structure 10 is in a range from the first inflow side end face 2 to a position where a distance from the first inflow side end face 2 is from 10 to 70% of a length of the first one-side-plugged honeycomb structure 10 along the central axis direction. That is, the inflow side region 31 is a region in a range from the first inflow side end face 2 to the predetermined position, and this predetermined position is the position where the distance from the first inflow side end face 2 is from 10 to 70% of the length of the first one-side-plugged honeycomb structure 10 along the central axis direction. Moreover, the predetermined position is a region in a range to a position preferably from 20 to 50%, further preferably from 30 to 40%. When the region is in the range from the first inflow side end face 2 to the position where the distance from the first inflow side end face 2 is less than 10% of the length of the first one-side-plugged honeycomb structure 10 along the central axis direction, a region onto which the three way catalyst is loaded is small, and the exhaust gas is not sufficiently purified. On the other hand, if the region is in the range to the position exceeding 70%, the pressure drop becomes excessively large. As described above, the first one-side-plugged honeycomb structure 10 is disposed so that the exhaust gas directly hits the first inflow side end face 2. Therefore, the temperature of the inflow side region 31 rises in the early stage immediately after the start of the operation of the engine, and the catalyst reaction of the three way catalyst loaded onto the partition walls 5 in the inflow side region 31 can be activated in the early stage immediately after the start of the operation of the engine.

It is to be noted that the amount of the catalyst to be loaded per unit volume of the outflow side region 32 is preferably 60 g/L or less, further preferably from 10 to 60 g/L, especially preferably from 20 to 60 g/L. If the load amount exceeds 60 g/L, pores of the partition walls 5 are closed, which might excessively increase the pressure drop.

There is not any special restriction on the shape of the cells 4 of the first honeycomb base material 6, but the section of the cell perpendicular to the central axis preferably has a polygonal shape such as a triangular, quadrangular, pentangular, hexagonal or octagonal shape, a circular shape, an elliptic shape or another indeterminate shape. A combination of the quadrangular shape and octagonal shape is also a preferable configuration.

Moreover, all the cells of the first honeycomb base material 6 may have the same hydraulic diameter, or the opened cells 4 in the first inflow side end face 2 may have a hydraulic diameter different from that of the opened cells 4 in the first outflow side end face 3. Both of the above cases are preferable, but the different hydraulic diameters of the cells 4 are more preferable. Specifically, when the exhaust gas of the gasoline engine is purified, to decrease the pressure drop, the hydraulic diameter of the opened cell 4 in the first outflow side end face 3 is preferably larger than that of the opened cell 4 in the first inflow side end face 2. The hydraulic diameter of the opened cell 4 in the first inflow side end face 2 is preferably from 20 to 45% of the hydraulic diameter of the opened cell 4 in the first outflow side end face 3. In the present specification, 'the cell hydraulic diameter' is a value calculated by '4 x (sectional area)/(peripheral length)'. Here, 'the sectional area' is the area of the section of the cell perpendicular to a cell extending direction, and 'the peripheral length' is 'the length of the outer periphery of each cell' in the section of the cell perpendicular to the cell extending direction.

The first honeycomb base material 6 (the partition walls 5) contains a ceramic material as a main component. Specifically, the material of the partition walls 5 is preferably at least one selected from the group consisting of silicon carbide, a silicon-silicon carbide based composite material, cordierite, mullite, alumina, spinel, a silicon carbide-cordierite based composite material, lithium aluminum silicate and aluminum titanate. Among these materials, cordierite is preferable because this material has a small thermal expansion coefficient and an excellent resistance to thermal shock. Moreover, 'contains the ceramic material as the main component' means that the whole material contains 90 mass% or more of the ceramic material.

Fig. 2 is a perspective view schematically showing the first one-side-plugged honeycomb structure 10 constituting the exhaust gas purifying device 100 shown in Fig. 1 as an example of the cylindrical first one-side-plugged honeycomb structure 10. The outer shape of the first one-side-plugged honeycomb structure 10 is not limited to a cylindrical shape shown in Fig. 2, and examples of the outer shape include a cylinder shape having a polygonal bottom face such as a quadrangular bottom face and a cylinder shape including a bottom face having an indeterminate shape. Moreover, there is not any special restriction on the size of the first one-side-plugged honeycomb structure 10, but the length L₁ along the central axis direction is preferably from 30 to 200 mm. Moreover, when the outer shape of the first one-side-plugged
honeycomb structure 10 is, for example, a cylindrical shape, the diameter D₁ of the bottom face of the structure is preferably from 80 to 180 mm. When the first one-side-plugged honeycomb structure 10 has a shape other than the cylindrical shape, the area of the bottom face is preferably in the same range as that of the bottom face of the above cylindrical shape.

### [1-1-1] First Plugged Portion:

The material (the ceramic material) of the first plugged portions 8 arranged in the first one-side-plugged honeycomb structure 10 is preferably the same as that of the first honeycomb base material 6 (the partition walls 5) constituting the first one-side-plugged honeycomb structure 10. In consequence, during firing, the first plugged portions 8 firmly combine with the partition walls 5.

The first plugged portions 8 are preferably arranged to alternately plug the adjacent cells 4. When the first plugged portions 8 are arranged, the exhaust gas which has flowed into the plugged cells 4a passes through the partition walls 5 to flow into cells 4b which are not plugged. Therefore, the particulate matter in the exhaust gas which cannot pass through the pores of the partition walls 5 can be collected. Moreover, when the first plugged portions 8 are arranged to alternately plug the adjacent cells 4, the particulate matter in the exhaust gas can effectively be collected. Here, when the cells 4 have a polygonal shape, 'adjacent' means that the sides of the polygonal shape are adjacent to each other.

For example, Fig. 3 is a plan view schematically showing the first outflow side end face 3 of the first one-side-plugged honeycomb structure 10 constituting the embodiment of the exhaust gas purifying device of the present invention as an example in which the first plugged portions 8 are arranged to alternately plug the adjacent cells 4. Specifically, the predetermined cells 4 (4a) having the formed first plugged portions 8 and the remaining cells 4 (4b) having both the opened ends are alternately arranged to form a checkered pattern in the example.

Moreover, when a cell group constituted of a plurality of adjacent cells 4 is a unit cell group, the first plugged portions 8 are preferably arranged to alternately plug adjacent unit cell groups. Here, when the unit cell groups are assembled to form the first honeycomb base material, the number of the cells constituting each unit cell group does not have to be a constant cell number. Furthermore, the cells 4 positioned at an outermost periphery of the structure have a shape formed along an outer peripheral portion thereof.

In other words, in the first outflow side end face 3 of the first one-side-plugged honeycomb structure 10 in which the open frontal areas of the plurality of cells 4 are longitudinally and transversely arranged, the cell group constituted of the plurality of adjacent cells 4 is regarded as the unit cell group, and the plurality of unit cell groups are arranged to be adjacent to one another, thereby constituting the plurality of cells 4. From this viewpoint, it is considered that the first plugged portions 8 are arranged to alternately plug the adjacent unit cell groups.

In other words, in the first outflow side end face 3 of the first one-side-plugged honeycomb structure 10 in which the open frontal areas of the plurality of cells 4 are longitudinally and transversely arranged, the first outflow side end face 3 is divided into constituent units (the unit cell groups) each constituted of the plurality of adjacent cells 4, it is considered that the first plugged portions 8 are arranged to alternately plug the adjacent unit cell groups.

In a case where the first plugged portions 8 are arranged as described above, the flow rate of the exhaust gas passing through the partition walls 5 increases as compared with a case where the first plugged portions 8 are arranged to alternately plug the adjacent cells 4 (see Fig. 3), whereby the particulate matter in the exhaust gas can effectively be collected. Here, when the cell 4 or a unit cell group 34 has a polygonal shape, 'adjacent' means that the sides of the polygonal shape are adjacent to each other.

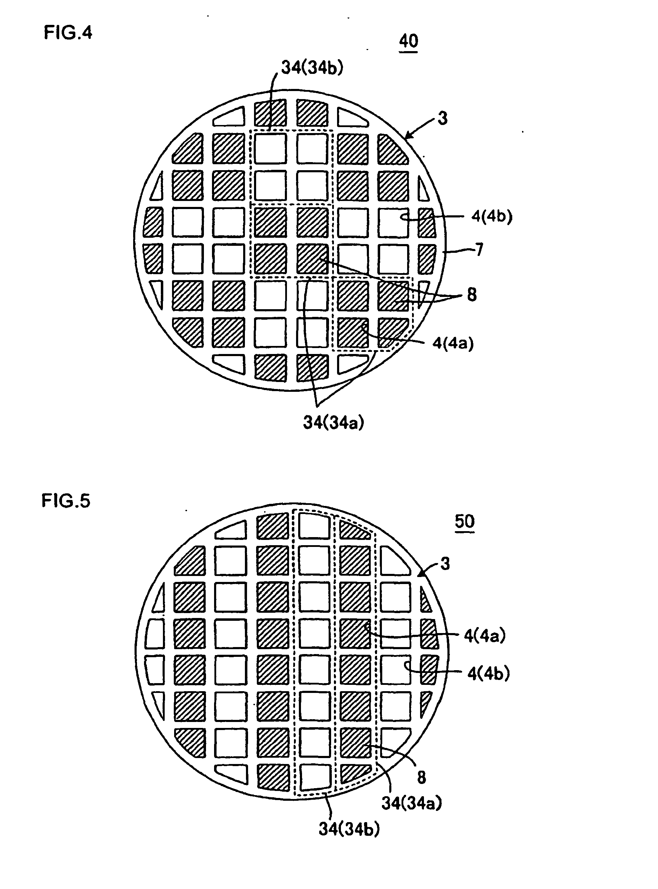

Fig. 4 to Fig. 6 are plan views each schematically showing an outflow side end face of another embodiment of the exhaust gas purifying device of the present invention. When the cell group constituted of the plurality of adjacent cells 4 is the unit cell group 34, the first plugged portions 8 are arranged to alternately plug the adjacent unit cell groups 34 in this example. It is to be noted that in Fig. 4 to Fig. 6, common constituent elements are denoted with the same reference numerals.

Specifically, in the example of Fig. 4, when a cell group constituted of two longitudinally and transversely adjacent cells 4 (four cells 4 in total) is a unit cell group 34, in a first outflow side end face 3 of a first one-side-plugged honeycomb structure 40, first plugged portions 8 are alternately arranged in the adjacent unit cell groups 34, to form a checkered pattern. That is, among predetermined unit cell groups 34a and remaining unit cell groups 34b arranged alternately adjacent to each other, the first plugged portions 8 are arranged in the predetermined unit cell groups 34a in the example.

In the example of Fig. 5, in a first outflow side end face 3 of a first one-side-plugged honeycomb structure 50, when a cell group constituted of adjacent cells 4 arranged so that the cells 4 positioned at both ends are positioned at the outermost periphery and arranged in one row is a unit cell group 34 and the unit cell groups 34 are formed to be parallel and adjacent to each other, first plugged portions 8 are alternately arranged in the adjacent unit cell groups 34 to form a striped pattern. That is, among predetermined unit cell groups 34a and remaining unit cell groups 34b arranged alternately adjacent to each other, the first plugged portions 8 are arranged in the predetermined unit cell groups 34a in the example.

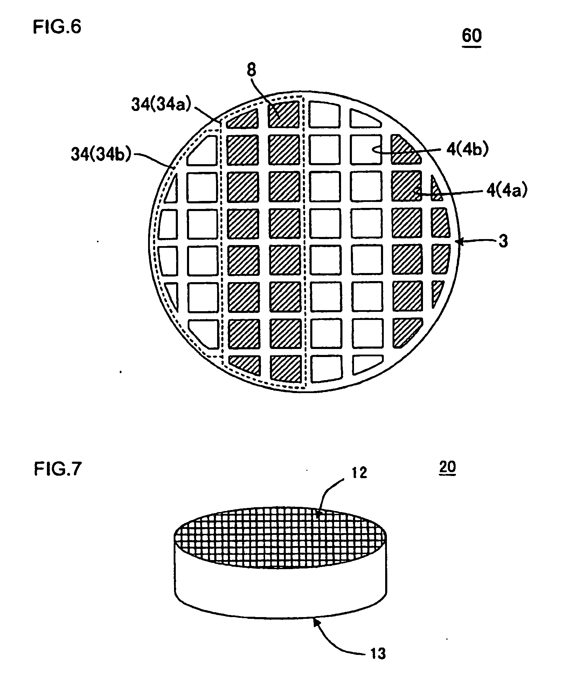

In the example of Fig. 6, in a first outflow side end face 3 of a first one-side-plugged honeycomb structure 60, when a cell group is constituted of adjacent cells 4 arranged so that the cells 4 positioned at both ends are positioned at the outermost periphery and arranged in one row, two-row cell groups are a unit cell group 34 and the unit cell groups 34 are formed to be parallel and adjacent to each other, first plugged portions 8 are alternately arranged in the adjacent unit cell groups 34 to form a striped pattern. That is, among predetermined unit cell groups 34a and remaining unit cell groups 34b arranged alternately adjacent to each other, the first plugged portions 8 are arranged in the predetermined unit cell groups 34a in the example.

The depth of the first plugged portion 8 is preferably from 1 to 5 mm, further preferably from 1 to 3 mm. If the depth is smaller than 1 mm, the strength of the first plugged portions 8 might deteriorate. On the other hand, if the depth is larger than 5 mm, the area of the partition wall 5 for collecting the PM might decrease. Here, the depth of the first plugged portion 8 means the length of the first plugged portion 8 along the extending direction of the cells 4.

Moreover, the first one-side-plugged honeycomb structure 10 may have an outer peripheral wall positioned at the outermost periphery thereof. It is to be noted that the outer peripheral wall is preferably an integrally formed wall formed integrally with a porous base material during forming, but a cement coat wall made of a ceramic cement material or the like and having a predetermined shape obtained by grinding the outer periphery of the porous base material after the forming is also a preferable configuration of the outer peripheral wall. In case of the integrally formed wall, the material of the outer peripheral wall is preferably the same as that of the first one-side-plugged honeycomb structure 10. Moreover, when the outer peripheral wall is the cement coat wall, examples of the material of the cement coat wall include a material obtained by adding a flux component such as glass to a co-base. Furthermore, the thickness of the outer peripheral wall is preferably from 0.5 to 1.5 mm.

### [1-1-1] Ternary Catalyst:

The three way catalyst is a catalyst for mainly removing hydrocarbon (HC), carbon monoxide (CO) and nitrogen oxide (NOx). Examples of the three way catalyst include a catalyst containing platinum (Pt), palladium (Pd) or rhodium (Rh). This three way catalyst oxidizes hydrocarbon to water and carbon dioxide, oxidizes carbon monoxide to carbon dioxide or reduces nitrogen oxide to nitrogen, to purify the exhaust gas.

The amount of the three way catalyst to be loaded per unit volume of the inflow side region 31 of the first one-side-plugged honeycomb structure 10 is preferably from 100 to 400 g/L, further preferably from 100 to 300 g/L and especially preferably from 100 to 250 g/L. If the load amount is less than 100 g/L, it might be difficult to sufficiently purify the exhaust gas. On the other hand, if the amount exceeds 400 g/L, the pressure drop becomes excessively large. Moreover, a heat capacity in the inflow side region 31 increases, and much time is required for reaching the catalyst activating temperature, which might lower an exhaust gas purifying efficiency.

### [1-2] Second One-Side-Plugged Honeycomb Structure:

In the second one-side-plugged honeycomb structure 20, the second honeycomb base material 16 has a honeycomb shape including the porous partition walls 15 arranged to form the plurality of cells 14 which extend through the second honeycomb base material from the second inflow side end face 12 to the second outflow side end face 13 and become the through channels of the fluid.

The thickness of the partition walls 15 is preferably from 50.8 to 254 µm, further preferably from 50.8 to 200 µm, especially preferably from 50.8 to 150 µm. If the thickness is less than 50.8 µm, the strength of the second one-side-plugged honeycomb structure 20 might deteriorate. On the other hand, if the thickness exceeds 254 µm, the pressure drop during the passing of the exhaust gas through the cells 14 might become large. The thickness of the partition walls 15 is a value measured by a method of observing the sections of the partition walls parallel to the central axis by the microscope.

The cell density of the second honeycomb base material 16 (the second one-side-plugged honeycomb structure 20) (i.e., the cell density of the section of the second honeycomb base material 16 perpendicular to the central axis thereof) is preferably from 32 to 186 cells/cm², further preferably from 50 to 150 cells/cm², especially preferably from 50 to 100 cells/cm². If the cell density is less than 32 cells/cm², the strength of the second one-side-plugged honeycomb structure 20 might deteriorate. On the other hand, if the cell density exceeds 186 cells/cm², the pressure drop might become large.

The porosity of the partition walls 15 is preferably from 35 to 70%, further preferably from 38 to 60%, especially preferably from 38 to 50%. If the porosity is less than 35%, the pressure drop might increase. On the other hand, if the porosity exceeds 70%, the second one-side-plugged honeycomb structure 20 might become brittle and easily be lost. The porosity of the partition walls 15 is a value measured by the mercury porosimeter.

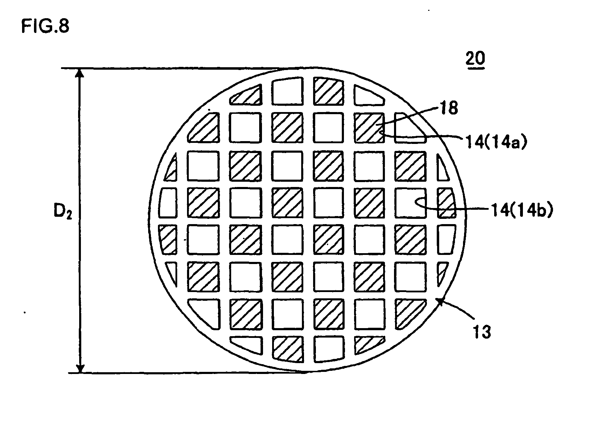

A value of a ratio of a length L₂ of the second honeycomb base material 16 along the central axis direction with respect to a diameter D₂ of the second inflow side end face 12 (see Fig. 8) is preferably from 0.1 to 1.0, further preferably from 0.3 to 1.0, especially preferably from 0.5 to 1.0. If the value is less than 0.1, the amount of the exhaust gas passing through the partition walls 15 decreases. Therefore, the collecting efficiency of the particulate matter might deteriorate. On the other hand, if the value exceeds 1.0, the pressure drop in the through channels of the exhaust gas increases. Therefore, the whole pressure drop of the present device might increase to lower the engine output.

The average pore diameter of the partition walls 15 is preferably from 5 to 30 µm, further preferably from 10 to 25 µm. If the average pore diameter is less than 5 µm, the pressure drop might increase even in a case where a less amount of the particulate matter is deposited. On the other hand, if the average pore diameter exceeds 30 µm, the second one-side-plugged honeycomb structure 20 becomes brittle and is easily lost sometimes, and a particulate matter collecting performance might deteriorate. The average pore diameter of the partition walls 15 is a value measured by the mercury porosimeter.

There is not any special restriction on the shape of the cells 14 of the second honeycomb base material 16, but the section of the cell perpendicular to the central axis preferably has a polygonal shape such as a triangular, quadrangular, pentangular, hexagonal or octagonal shape, a circular shape, an elliptic shape or another indeterminate shape. A combination of the quadrangular shape and octagonal shape is also a preferable configuration.

Moreover, all the cells of the second honeycomb base material 16 may have the same hydraulic diameter, or the opened cells 14 in the second inflow side end face 12 may have a hydraulic diameter different from that of the opened cells 14 in the second outflow side end face 13. Each of these cases is satisfactory, but the hydraulic diameters are preferably different from each other. Specifically, when the exhaust gas of the gasoline engine is purified, to decrease the pressure drop, the hydraulic diameter of the opened cell 14 in the second outflow side end face 13 is preferably larger than that of the opened cell 14 in the second inflow side end face 12. The hydraulic diameter of the opened cell 14 in the second inflow side end face 12 is preferably from 20 to 45% of the hydraulic diameter of the opened cell 14 in the second outflow side end face 13.

The second honeycomb base material 16 (the partition walls 15) contains a ceramic material as a main component. Specifically, the material of the partition walls 15 is preferably at least one selected from the group consisting of silicon carbide, a silicon-silicon carbide based composite material, cordierite, mullite, alumina, spinel, a silicon carbide-cordierite based composite material, lithium aluminum silicate and aluminum titanate. Among these materials, cordierite is preferable because this material has a small thermal expansion coefficient and an excellent resistance to thermal shock. Moreover, 'contains the ceramic material as the main component' means that the whole material contains 90 mass% or more of the ceramic material.

Examples of the outer shape of the second one-side-plugged honeycomb structure 20 include a cylinder shape including a bottom face having a polygonal shape such as a cylindrical shape, an elliptic cylinder shape of a quadrangular cylinder shape, and a cylinder shape including a bottom face having an indeterminate shape. Moreover, there is not any special restriction on the size of the second one-side-plugged honeycomb structure 20, but the length L₂ along the central axis direction (see Fig. 1) is preferably from 30 to 200 mm. Moreover, when the outer shape of the second one-side-plugged honeycomb structure 20 is, for example, a cylindrical shape, the diameter D₂ of the bottom face of the structure (see Fig. 8) is preferably from 80 to 180 mm. When the second one-side-plugged honeycomb structure 20 has a shape other than the cylindrical shape, the area of the bottom face is preferably in the same range as that of the bottom face of the above cylindrical shape.

### [1-2-1] Second Plugged Portion:

The material (the ceramic material) of the second plugged portions 18 arranged in the second one-side-plugged honeycomb structure 20 is preferably the same as that of the second honeycomb base material 16 (the partition walls 15) constituting the second one-side-plugged honeycomb structure 20. In consequence, during the firing, the second plugged portions 18 firmly combine with the partition walls 15.

The second plugged portions 18 are preferably arranged to alternately plug the adjacent cells 14. When the second plugged portions 18 are arranged, the exhaust gas which has flowed into the plugged cells 14a passes through the partition walls 15 to flow into cells 14b which are not plugged. Therefore, the particulate matter in the exhaust gas which cannot pass through the pores of the partition walls 15 can be collected. Moreover, when the second plugged portions 18 are arranged to alternately plug the adjacent cells 14, the particulate matter in the exhaust gas can effectively be collected.

For example, Fig. 8 is a plan view schematically showing the second outflow side end face 13 of the second one-side-plugged honeycomb structure 20 as an example in which the second plugged portions 18 are arranged to alternately plug the adjacent cells 14. Specifically, in the second outflow side end face 13 of the second one-side-plugged honeycomb structure 20, the predetermined cells 14 (14a) having the formed second plugged portions 18 and the remaining cells 14 (14b) which are not provided with the second plugged portions 18 are alternately arranged to form the checkered pattern in the example.

Moreover, when a cell group constituted of a plurality of adjacent cells 14 is a unit cell group, the second plugged portions 18 are preferably arranged to alternately plug adjacent unit cell groups.

In a case where the second plugged portions 18 are arranged as described above, the amount of the exhaust gas passing through the partition walls 15 increases as compared with a case where the second plugged portions 18 are arranged to alternately plug the adjacent cells 14, whereby the particulate matter in the exhaust gas can effectively be collected. Here, when the cell 14 or the unit cell group has a polygonal shape, 'adjacent' means that the sides of the polygonal shape are adjacent to each other.

Examples of the case where when the cell group constituted of the plurality of adjacent cells 14 is the unit cell group, the second plugged portions 18 are arranged to alternately plug the adjacent unit cell groups include examples similar to the case where when the cell group constituted of the plurality of adjacent cells 4 is the unit cell group, the first plugged portions 8 are arranged to alternately plug the adjacent unit cell groups.

The depth of the second plugged portions 18 is preferably from 1 to 5 mm, further preferably from 1 to 3 mm. If the depth is smaller than 1 mm, the strength of the second plugged portions 18 might deteriorate. On the other hand, if the depth is larger than 5 mm, the area of the partition walls 15 for collecting the PM might become small. Here, the depth of the second plugged portions 18 means the length of the second plugged portions 18 along the extending direction of the cells 14.

### [1-2-2] Catalyst:

The catalyst may be loaded onto the second one-side-plugged honeycomb structure 20 or the catalyst does not have to be loaded. However, when the catalyst is loaded, the amount of the catalyst to be loaded per unit volume needs to be smaller than the amount of the three way catalyst to be loaded per unit volume of the partition walls 5 in the inflow side region 31 of the first one-side-plugged honeycomb structure 10. Specifically, the amount of the catalyst to be loaded per unit volume of the second one-side-plugged honeycomb structure 20 is preferably 60 g/L or less, further preferably from 10 to 60 g/L, especially preferably from 20 to 60 g/L. If the load amount exceeds 60 g/L, the pressure drop might become excessively large.

Examples of the catalyst include the three way catalyst, an oxidizing catalyst, an SCR catalyst for selectively reducing NOx, and an NOx adsorber. The oxidizing catalyst contains a noble metal, preferably one or more noble metals selected from the group consisting of Pt, Rh and Pd. The total amount of the noble metals is preferably from 0.17 to 7.07 g per unit volume (1 cm³) of the second one-side-plugged honeycomb structure 20.

The three way catalyst is similar to the three way catalyst loaded onto the first one-side-plugged honeycomb structure 10, and examples of the three way catalyst include a three way catalyst similar to the three way catalyst loaded onto the first one-side-plugged honeycomb structure 10.

The SCR catalyst for selectively reducing NOx contains at least one selected from the group consisting of metal replacing zeolite, vanadium, titania, tungsten oxide, silver and alumina. Moreover, examples of the NOx adsorber include an alkali metal and/or an alkali earth metal. Examples of the alkali metal include K, Na and Li. Examples of the alkali earth metal include Ca. The total amount of K, Na, Li and Ca is preferably 5 g or more per unit volume (1 cm³) of the second one-side-plugged honeycomb structure 20.

Moreover, the second one-side-plugged honeycomb structure 20 may have an outer peripheral wall positioned at the outermost periphery thereof. It is to be noted that the outer peripheral wall is preferably an integrally formed wall formed integrally with a porous base material during forming, but a cement coat wall made of a ceramic cement material or the like and having a predetermined shape obtained by grinding the outer periphery of the porous base material after the forming is also a preferable configuration of the outer peripheral wall. In case of the integrally formed wall, the material of the outer peripheral wall is preferably the same as that of the second one-side-plugged honeycomb structure 20. Moreover, when the outer peripheral wall is the cement coat wall, examples of the material of the cement coat wall include a material obtained by adding a flux component such as glass to a co-base. Furthermore, the thickness of the outer peripheral wall is preferably from 0.5 to 1.5 mm.

It is to be noted that the exhaust gas purifying device 100 shown in Fig. 1 is an example comprising the second one-side-plugged honeycomb structure 20, but the device may further comprise at least a one-side-plugged honeycomb structure similar to the second one-side-plugged honeycomb structure. There is not any special restriction on the number of the other one-side-plugged honeycomb structures, but the number is preferably from 1 to 3, further preferably 1 or 2. When the device further comprises at least the other one-side-plugged honeycomb structure, the removing ratio of the particulate matter in the exhaust gas can be increased. It is to be noted that when the device further comprises still another one-side-plugged honeycomb structure, the other one-side-plugged honeycomb structure is disposed in the can member 30 on the outflow port 23 side from the second one-side-plugged honeycomb structure 20 so that the outflow side end face of the other one-side-plugged honeycomb structure faces the outflow port 23 side of the can member 30.

### [1-3] Can Member:

There is not any special restriction on the can member 30, and there may be used a conventional can member in which a ceramic honeycomb filter for purifying an exhaust gas of a car or the like is disposed. Examples of the material of the can member 30 include a metal such as stainless steel. The can member 30 preferably has such a size that the first one-side-plugged honeycomb structure 10 and the second one-side-plugged honeycomb structure 20 including a cushion material 40a wound therearound can be pressed into the can member.

As described above, the first one-side-plugged honeycomb structure 10 is disposed in the can member 30 on the inflow port 22 side so that the first inflow side end face 2 faces the inflow port 22 side of the can member 30, and the second one-side-plugged honeycomb structure 20 is disposed in the can member 30 on the outflow port 23 side so that the second outflow side end face 13 faces the outflow port side of the can member 30. That is, the first one-side-plugged honeycomb structure 10 and the second one-side-plugged honeycomb structure 20 are arranged in predetermined directions, respectively, and the structures are disposed in the same can member 30 while the structures are not connected via a connecting piping line or the like. In this way, the first one-side-plugged honeycomb structure 10 and the second one-side-plugged honeycomb structure 20 are disposed in the same can member 30, whereby the temperature lowering ratio of the exhaust gas is small as compared with a case where the structures are connected via the connecting piping line or the like. Carbon fine particles (the PM) collected by the second one-side-plugged honeycomb structure 20 easily burn, and hence the increase of the pressure drop due to clogging can be suppressed.

Moreover, the first one-side-plugged honeycomb structure 10 and the second one-side-plugged honeycomb structure 20 are preferably arranged with a space being left therebetween, to prevent the structures from being broken down by collision with each other owing to vibration or the like during an operation when the structures are mounted on a car or the like. Specifically, a distance K (see Fig. 1) between the first one-side-plugged honeycomb structure 10 and the second one-side-plugged honeycomb structure 20 is preferably from 1 to 20 mm, further preferably from 3 to 10 mm. If the distance is less than 1 mm, the structures might break down by the collision with each other owing to the vibration or the like during the operation when the structures are mounted on the car or the like. On the other hand, if the distance exceeds 20 mm, the space between the first one-side-plugged honeycomb structure 10 and the second one-side-plugged honeycomb structure 20 enlarges, which increases a contact area of the exhaust gas and the inner surface of the can member 30. Therefore, since the exhaust gas comes in contact with the inner surface of the can member 30, the temperature of the exhaust gas noticeably lowers, and the exhaust gas purifying efficiency might lower.

Examples of a method of arranging the first one-side-plugged honeycomb structure 10 and the second one-side-plugged honeycomb structure 20 with the space therebetween include a method of disposing partition plates 42 and the like between the structures as shown in Fig. 1. The material of the partition plates 42 may be the same as that of the can member 30. Specifically, examples of the material include a metal such as stainless steel.

A value of a ratio of the length L₂ of the second one-side-plugged honeycomb structure 20 along the central axis direction with respect to the length L₁ of the first one-side-plugged honeycomb structure 10 along the central axis direction is preferably from 0.3 to 0.7, further preferably from 0.3 to 0.6, especially preferably from 0.3 to 0.5. If the value of the ratio is less than 0.3, the amount of the exhaust gas passing through the partition walls 15 of the second one-side-plugged honeycomb structure 20 decreases, which might lower the collecting efficiency of the particulate matter. On the other hand, if the value exceeds 0.7, the surface areas of the partition walls in the inflow side region 31 of the first one-side-plugged honeycomb structure 10 including the catalyst loaded with a high concentration decrease. Therefore, it becomes difficult to remove the particulate matter in the exhaust gas, and the purifying efficiency of the exhaust gas might lower.

Moreover, in the exhaust gas purifying device 100 shown in Fig. 1, the first one-side-plugged honeycomb structure 10 and the second one-side-plugged honeycomb structure 20 are disposed in the can member 30 in a state where the outer peripheries of the structures are covered with the cushion material 40a, respectively. Moreover, the cushion material 40a prevents the first one-side-plugged honeycomb structure 10 and the second one-side-plugged honeycomb structure 20 from being broken down. The first one-side-plugged honeycomb structure 10 and the second one-side-plugged honeycomb structure 20 are preferably disposed in the can member 30 while an external pressure is applied to the structures via the cushion material 40a. The first one-side-plugged honeycomb structure 10 and the second one-side-plugged honeycomb structure 20 disposed in such a state can be prevented from moving in the can member 30, and can be stabilized in the can member 30. As the cushion material 40a, a mat made of a ceramic fiber or the like may be used.

### [2] Manufacturing Method of Exhaust Gas Purifying Device:

Next, a manufacturing method of the exhaust gas purifying device of the present invention will be described. There is not any special restriction on the manufacturing method of the exhaust gas purifying device of the present invention, but examples of the method include a method as follows.

The manufacturing method comprises a first one-side-plugged honeycomb structure forming step of allowing a catalyst slurry to flow into a plurality of cells from a first inflow side end face side of a first honeycomb base material of a fired one-side-plugged honeycomb article comprising a first honeycomb base material having porous partition walls arranged to form the plurality of cells which extend from the first honeycomb base material from a first inflow side end face to a first outflow side end face and become through channels of a fluid, and first plugged portions arranged to plug open frontal areas of cells in a part of the first outflow side end face of this first honeycomb base material, all the cells in the first inflow side end face being opened, thereby coating, with a three way catalyst, the partition walls of all the cells in an inflow side region in a range from the first inflow side end face to a position where a distance from the first inflow side end face is from 10 to 70% of a length of a first one-side-plugged honeycomb structure along a central axis direction, to form the first one-side-plugged honeycomb structure; a second one-side-plugged honeycomb structure forming step of forming a second one-side-plugged honeycomb structure including a second honeycomb base material having porous partition walls arranged to form a plurality of cells which extend through the second honeycomb base material from a second inflow side end face to a second outflow side end face and become through channels of the fluid, and second plugged portions arranged to plug open frontal areas of the cells in a part of the second outflow side end face of this second honeycomb base material, all the cells in the second inflow side end face being opened; and an assembling step of disposing the first one-side-plugged honeycomb structure in a can member on an inflow port side thereof, the can member having an inflow port through which an exhaust gas flows into the can member and an outflow port through which the purified exhaust gas flows out of the can member, so that the first inflow side end face faces an inflow port side of the can member, and disposing the second one-side-plugged honeycomb structure in the can member on an outflow port side thereof so that the second outflow side end face of the structure faces the outflow port side of the can member. The first one-side-plugged honeycomb structure formed in the second one-side-plugged honeycomb structure forming step comprises two regions of an inflow side region which is a region on an inflow side of the fluid and an outflow side region which is a region on an outflow side of the fluid, any catalyst is not loaded onto the outflow side region or the catalyst is loaded onto the outflow side region and the amount of the catalyst to be loaded per unit volume is smaller than the amount of the three way catalyst to be loaded per unit volume of the partition walls in the inflow side region. In the second one-side-plugged honeycomb structure of the second one-side-plugged honeycomb structure forming step, any catalyst is not loaded, or the catalyst is loaded and the amount of the catalyst per unit volume is smaller than the amount of the three way catalyst to be loaded onto the partition walls in the inflow side region of the first one-side-plugged honeycomb structure. The exhaust gas purifying device of the present invention can be manufactured by the above steps.

### [2-1] First One-Side-Plugged Honeycomb Structure Forming Step:

The fired one-side-plugged honeycomb article for use in the first one-side-plugged honeycomb structure forming step can be prepared as follows. First, a forming material is kneaded to form a kneaded clay. Next, the obtained kneaded clay is extruded in a honeycomb shape, to obtain a formed first honeycomb article. After plugging open frontal areas of cells in a part of one end face of the obtained formed first honeycomb article, the article can be fired to prepare the fired one-side-plugged honeycomb article.

The forming material is preferably obtained by adding a dispersion medium and an additive to a ceramic material, and examples of the additive include an organic binder, a pore former and a surfactant. Examples of the dispersion medium include water.

The ceramic material is preferably at least one selected from the group consisting of silicon carbide, a silicon-silicon carbide based composite material, a cordierite forming material, mullite, alumina, spinel, a silicon carbide-cordierite based composite material, lithium aluminum silicate and aluminum titanate. Among these materials, the cordierite forming material is preferable, because the material has a small thermal expansion coefficient and an excellent resistance to thermal shock. The content of the ceramic material is preferably from 70 to 90 mass% with respect to the whole forming material.

Examples of the organic binder include methyl cellulose, hydroxypropoxyl cellulose, hydroxyethyl cellulose, carboxymethyl cellulose, and polyvinyl alcohol. Among these materials, it is preferable to use a combination of methyl cellulose and hydroxypropoxyl cellulose. The content of the binder is preferably from 1 to 5 mass% of the whole forming material.

There is not any special restriction on the pore former as long as pores are made after the firing, and examples of the pore former include starch, resin balloon, water absorbing resin, and silica gel. The content of the pore former is preferably from 1 to 10 mass% of the whole forming material.

As the surfactant, ethylene glycol, dextrine, fatty acid soap, polyalcohol or the like may be used. These materials may be used alone or as a combination of two or more of them. The content of the surfactant is preferably from 0.1 to 5 mass% of the whole forming material.

The content of the dispersion medium is preferably from 25 to 35 mass% of the whole forming material.

The particle diameters of the ceramic material (aggregate particles) for use, the amount of the ceramic material to be blended, the particle diameters of the pore former to be added, and the amount of the pore former to be blended can be regulated to obtain a porous base material having desirable porosity and average pore diameter.

There is not any special restriction on a method of kneading the forming material to form the kneaded clay, and examples of the method include a method using a kneader, a vacuum clay kneader or the like. The extrusion forming may be performed by using a die having desirable cell shape, partition wall thickness and cell density. As the material of the die, a super hard metal which does not easily wear is preferable.

Examples of a method of plugging the open frontal areas of the cells include a method of charging a plugging material into the open frontal areas of the cells. In the method of charging the plugging material, specifically, a mask is applied to one end face of the formed first honeycomb article so as to close the open frontal areas of the cells in a part of the article. Here, there is not any special restriction on a method of applying the mask, but in a preferable method, the mask is preferably applied so that in the first outflow side end face of the first one-side-plugged honeycomb structure, predetermined cells having plugged open frontal areas and the remaining cells having open frontal areas which are not plugged are alternately arranged to form a checkered pattern. Moreover, the slurried plugging material containing a ceramic material, water or alcohol and an organic binder is beforehand stored in a storage container. The ceramic material is preferably the same as the ceramic material used as the raw material of the formed first honeycomb article. The content of the ceramic material is preferably from 70 to 90 mass% of the whole plugging material. Moreover, the content of water or alcohol is preferably from 10 to 30 mass% of the whole plugging material, and the content of the organic binder is preferably from 0.1 to 2.0 mass% of the whole plugging material. Examples of the organic binder include hydroxypropoxyl methyl cellulose and methyl cellulose. Subsequently, after immersing, into the storage container, the end of the article to which the mask is applied, the plugging material is charged into the open frontal areas of the cells to which any mask is not applied, thereby forming the first plugged portions. The viscosity of the plugging material is preferably from 600 to 1200 Pa●s. It is to be noted that the viscosity of the plugging material is a value measured by a rotary viscosity meter at a temperature of 30°C and with a rotation speed of 30 rpm.

Furthermore, a firing temperature can appropriately be determined in accordance with the material of the formed first honeycomb article. When the material of the formed first honeycomb article is, for example, cordierite, the firing temperature is preferably from 1380 to 1450°C, further preferably from 1400 to 1440°C. Moreover, firing time is preferably from about 3 to 10 hours.

It is to be noted that the formed first honeycomb article may be dried before fired. There is not any special restriction on a drying method, and examples of the method include hot air drying, microwave drying, dielectric drying, reduced pressure drying, vacuum drying and freeze drying. Among these methods, it is preferable to perform the dielectric drying, microwave drying or hot air drying alone or as a combination. Furthermore, as drying conditions, a drying temperature of 30 to 150°C and drying time of one minute to two hours are preferably set.

It is to be noted that before forming the plugged portions in the formed first honeycomb article, the formed first honeycomb article is fired to obtain the fired honeycomb article, and the plugged portions are formed in the open frontal areas of the cells in a part of one end face of the obtained fired honeycomb article. Afterward, the article can further be fired to obtain the fired one-side-plugged honeycomb article.

There is not any special restriction on a method of coating the surface of the partition wall of each cell with the catalyst slurry (loading the three way catalyst), and a known coating method may be used. For example, first the catalyst slurry containing the three way catalyst is prepared. Afterward, the prepared catalyst slurry is allowed to flow into the cells by dipping or suction. The whole surface of the partition wall of each cell is preferably coated with this catalyst slurry. Subsequently, after allowing the catalyst slurry to flow into the cells, a surplus slurry is blown off by compressed air. Afterward, the catalyst slurry is dried and baked, so that the first one-side-plugged honeycomb structure including the three way catalyst loaded onto the surfaces of the partition walls of the cells can be obtained. As the drying conditions, a temperature of 80 to 150°C and time of 1 to 6 hours are preferably set. Moreover, as baking conditions, a temperature of 450 to 700°C and time of 0.5 to 6 hours are preferably set. It is to be noted that examples of a component other than the catalyst contained in the catalyst slurry include alumina.

### [2-2] Second One-Side-Plugged Honeycomb Structure Forming Step:

In the second one-side-plugged honeycomb structure forming step, the second one-side-plugged honeycomb structure can be prepared as follows. First, the forming material is kneaded to form a kneaded clay. Next, the obtained kneaded clay is extruded into a honeycomb shape to obtain the formed second honeycomb article. After plugging the open frontal areas of the cells in a part of one end face of the obtained formed second honeycomb article, the article can be fired to prepare the second one-side-plugged honeycomb structure. It is to be noted that as a forming material, a method of kneading the forming material to form a kneaded clay, a method of plugging open frontal areas of cells and a firing method, it is possible to employ the materials and methods illustrated in the method of preparing the fired one-side-plugged honeycomb article in the first one-side-plugged honeycomb structure forming step.

When the catalyst is loaded onto the second one-side-plugged honeycomb structure, examples of a method of loading the catalyst include a method of allowing the catalyst slurry to flow into the plurality of cells from a second inflow side end face side of the second honeycomb base material of the second one-side-plugged honeycomb structure to coat the partition walls of the plurality of cells with the catalyst in the same manner as in the first one-side-plugged honeycomb structure forming step. Examples of the catalyst include a catalyst similar to a catalyst which may be loaded onto the second one-side-plugged honeycomb structure 20.

### [2-3] Assembling Step:

In the assembling step, after covering the outer peripheries of the first one-side-plugged honeycomb structure and the second one-side-plugged honeycomb structure with the cushion material, respectively, the first one-side-plugged honeycomb structure and second one-side-plugged honeycomb structure covered with the cushion material are disposed in the can member. At this time, the first and second one-side-plugged honeycomb structures having a compressed state are preferably disposed in the can member. Examples of the cushion material include a mat made of a ceramic fiber. When the first and second one-side-plugged honeycomb structures are disposed in this manner, the structures can be prevented from moving in the can member.

As the can member, a heretofore known can member may be used. The can member may be prepared by, for example, pressing and welding a plate material made of ferrite based stainless steel. Specifically, the diameter of the inflow port of the can member is preferably from 25 to 80 mm, and the diameter of the outflow port is preferably from 25 to 80 mm.

### [Examples]

Hereinafter, the present invention will specifically be described with respect to examples, but the present invention is not limited to these examples.

### (Example 1)

### [Preparation of First One-Side-Plugged Honeycomb Structure] (First One-Side-Plugged Honeycomb Structure Forming Step)

First, as a cordierite forming material, alumina, aluminum hydroxide, kaoline, talc and silica were used, and 13 parts by mass of a pore former, 35 parts by mass of a dispersion medium, 6 parts by mass of an organic binder and 0.5 part by mass of a dispersant were added to 100 parts by mass of the cordierite forming material, respectively, mixed and kneaded to prepare a kneaded clay. As the dispersion medium, water was used, as the pore former, coke having an average particle diameter of 1 to 10 µm was used, as the organic binder, hydroxypropyl methyl cellulose was used, and as the dispersant, ethylene glycol was used. As the pore former, resin balloon, water absorbing resin or the like may be used. The particle diameters and amount of the pore former can appropriately be controlled to control the pore diameters and porosity of partition walls.

Next, the kneaded clay was extruded by using a predetermined die, to form a formed honeycomb article having a quadrangular cell shape and entirely having a columnar (cylindrical) shape. Subsequently, the formed honeycomb article was dried by a microwave drier, and further completely dried by a hot air drier, and both end faces of the formed honeycomb article were cut to obtain a predetermined dimension. Next, a mask was applied to open frontal areas of cells in a part of one end face of the formed honeycomb article. The end of the article including the applied mask was immersed in a plugging slurry containing the cordierite forming material, to charge the plugging slurry into the open frontal areas of predetermined cells so that in a outflow side end face, the predetermined cells having formed plugged portions and the remaining cells having both opened ends are alternately arranged to form a checkered pattern. Afterward, the formed honeycomb article having the formed plugged portions was dried by the hot air drier, and further fired at 1410 to 1440°C for five hours, to obtain a one-side-plugged honeycomb structure in which any plugged portion was not formed in an inflow side end and the plugged portions were formed in an outflow side end.

Next, mixed particles (a specific surface area of 50 m²/g) of γAl₂O₃ having an average particle diameter of 100 µm and CeO₂ having an average particle diameter of 100 µm were wet-ground by a ball mill to obtain ground particles having an average particle diameter of 5 µm. The obtained ground particles were immersed into a solution containing Pt and Rh to load Pt and Rh into pores of the ground particles. Subsequently, acetic acid and water were added to the ground particles including loaded Pt and Rh to obtain a coating slurry. The inflow side end of the prepared one-side-plugged honeycomb structure was immersed into the obtained coating slurry. Specifically, a portion in a range from an inflow side end face to a position where a distance from the inflow side end face was 15% of the length of the one-side-plugged honeycomb structure along a longitudinal direction was immersed into the coating slurry. In this way, the surfaces of the partition walls in a predetermined region on the inflow side were coated with a catalyst to form a catalyst layer. Afterward, the article was dried and fired at 600°C for 3 hours, to prepare a first one-side-plugged honeycomb structure.

The prepared first one-side-plugged honeycomb structure had a diameter of 110 mm, a length of 80 mm along a central axis direction, a ratio value (L/D) of 0.7 of a length L₁ along the central axis direction with respect to a diameter D₁ of a first inflow side end face of a first honeycomb base material, a cell density of 62.0 cells/cm², a rib thickness (a partition wall thickness) of 0.076 mm, a partition wall porosity of 38%, and a partition wall average pore diameter of 8 µm. In the first outflow side end face of the first one-side-plugged honeycomb structure, predetermined cells having formed first plugged portions and the remaining cells having both opened ends were alternately arranged to form a checkered pattern (i.e., 'a plugged portion arrangement shape' is 'alternate'), an inflow side region was in a range from the first inflow side end face to a position where a distance from the first inflow side end face was 15% of the length of the first one-side-plugged honeycomb structure along the central axis direction, the amount of the catalyst to be loaded onto the inflow side region was 400 g/L, a noble metal amount in the inflow side region was 3 g/L, the amount of the catalyst to be loaded onto an outflow side region was 0 g/L, and a noble metal amount in the inflow side region was 0 g/L. Results are shown in Table 1.

It is to be noted that the amount of oxide (γAl₂O₃ and CeO₂) to be loaded per unit volume of the first one-side-plugged honeycomb structure was from 100 to 400 g/L, the amount of Pt to be loaded per unit volume of the first one-side-plugged honeycomb structure was from 1 to 2.5 g/L, and the amount of Rh to be loaded per unit volume of the first one-side-plugged honeycomb structure was from 0.2 to 1 g/L. Moreover, the average pore diameter of the catalyst layer was 5 µm, which was equal to the average particle diameter of the ground particles.

It is to be noted that in Table 1, 'the length' indicates the length of the first one-side-plugged honeycomb structure along the central axis direction, 'L/D' indicates the value of the ratio of the length L₁ of the first one-side-plugged honeycomb structure along the central axis direction with respect to the diameter D₁ of the first inflow side end face of the first honeycomb base material, and 'the rib thickness' indicates the thickness of the partition wall of the first honeycomb base material. 'The plugged portion arrangement shape' indicates the pattern (the shape) formed by the first plugged portions in the first outflow side end face of the first one-side-plugged honeycomb structure, 'alternate' indicates that the predetermined cells having the formed first plugged portions and the remaining cells having both the opened ends are alternately arranged to form a checkered pattern (see Fig. 3), '4-cells alternate' indicates that when a cell group constituted of laterally and transversely adjacent two cells (four cells in total) is a unit cell group, predetermined unit cell groups having formed first plugged portions and remaining unit cell groups having both opened ends are alternately arranged in the first outflow side end face to form a checkered pattern (see Fig. 4), and 'every other row' indicates that when a cell group constituted of adjacent cells positioned at both ends, positioned at an outermost periphery and arranged in one row is a unit cell group and these unit cell groups are formed to be parallel and adjacent to each other, the first plugged portions are alternately arranged in the adjacent unit cell groups (see Fig. 5). 'A length ratio (%)' indicates a predetermined position in the inflow side region. When the length ratio is, for example, 15%, the inflow side region is in a range from the first inflow side end face to a position where a distance from the first inflow side end face is 15% of the length of the first one-side-plugged honeycomb structure along the central axis direction.

### [Preparation of Second One-Side-Plugged Honeycomb Structure] (Second One-Side-Plugged Honeycomb Structure Forming Step)

First, as a cordierite forming material, alumina, aluminum hydroxide, kaoline, talc and silica were used, and 13 parts by mass of a pore former, 35 parts by mass of a dispersion medium, 6 parts by mass of an organic binder and 0.5 part by mass of a dispersant were added to 100 parts by mass of the cordierite forming material, respectively, mixed and kneaded to prepare a kneaded clay. As the dispersion medium, water was used, as the pore former, coke having an average particle diameter of 1 to 10 µm was used, as the organic binder, hydroxypropyl methyl cellulose was used, and as the dispersant, ethylene glycol was used. As the pore former, resin balloon, water absorbing resin or the like may be used. The particle diameters and amount of the pore former can appropriately be controlled to control the pore diameters and porosity of the partition walls.

Next, the kneaded clay was extruded by using a predetermined die, to form a formed honeycomb article having a quadrangular cell shape and entirely having a columnar (cylindrical) shape. Subsequently, the formed honeycomb article was dried by a microwave drier, and further completely dried by a hot air drier, and both end faces of the formed honeycomb article were cut to obtain a predetermined dimension. Next, a mask was alternately applied to open frontal areas of cells in a part of one end face of the formed honeycomb article in a checkered pattern. The end of the article including the applied mask was immersed into a plugging slurry containing the cordierite forming material, to charge the plugging slurry into open frontal areas of predetermined cells so that the predetermined cells having formed plugged portions and remaining cells having both opened ends were alternately arranged in the outflow side end face to form the checkered pattern. Afterward, the formed honeycomb article having the formed plugged portions was dried by the hot air drier, and further fired at 1410 to 1440°C for five hours, to prepare a second one-side-plugged honeycomb structure in which any plugged portion was not formed in the inflow side end and the plugged portions were formed in the outflow side end.

The obtained second one-side-plugged honeycomb structure had a diameter of 110 mm, a length of 20 mm along the central axis direction, a ratio value (L/D) of 0.18 of a length L₂ of the structure along the central axis direction with respect to a diameter D₂ of a second inflow side end face of a second honeycomb base material, a cell density of 62.0 cells/cm², a rib thickness (a partition wall thickness) of 0.076 mm, a partition wall porosity of 42.0%, and a partition wall average pore diameter of 4 µm. In the second outflow side end face of the second one-side-plugged honeycomb structure, predetermined cells having formed second plugged portions and remaining cells having both opened ends were alternately arranged to form a checkered pattern (i.e., 'the plugged portion arrangement shape' was 'alternate'), the amount of a catalyst to be loaded was 0 g/L, and the amount of a noble metal was 0 g/L. Results are shown in Table 2. It is to be noted that in Table 2, items similar to those of Table 1 have meanings similar to those of Table 1.

### [Preparation of Exhaust Gas Purifying Device]

### (Assembling Step)

The obtained first one-side-plugged honeycomb structure and second one-side-plugged honeycomb structure were disposed in a metal can member (specifically, made of ferrite based stainless steel) having an inflow port and an outflow port and including a partition plate having a thickness of 2 mm. When the structures were disposed, the outer peripheries of the first one-side-plugged honeycomb structure and second one-side-plugged honeycomb structure were covered with a mat containing a ceramic fiber as a main component, respectively. In this state, the structures were pressed and fixed into the can member. In consequence, an exhaust gas purifying device was prepared. It is to be noted that since the first and second one-side-plugged honeycomb structures were provided with the partition plates, a distance between the first one-side-plugged honeycomb structure and the second one-side-plugged honeycomb structure were held to be 7 mm.

As to the prepared exhaust gas purifying device, 'purification ratio', 'PM number emission', 'pressure drop' and 'general judgment' were evaluated by methods as follows. Results are shown in Table 3. The partition wall porosity and partition wall average pore diameter were measured by a mercury porosimeter. Moreover, 'the partition wall thickness' was measured by using a scanning electron microscope (SEM).

In Table 3, 'a length ratio value' indicates a value of a ratio of the length of the second one-side-plugged honeycomb structure along the central axis direction with respect to the length of the second one-side-plugged honeycomb structure along the central axis direction. In 'a connecting method', when the first and second one-side-plugged honeycomb structures are disposed in the same can member as shown in Fig. 1, 'the same can' is indicated. When the first and second one-side-plugged honeycomb structures are disposed in individual can members, respectively, and these can members are connected to each other via a piping line, 'pipe connecting' is indicated.

### [Measuring Method of Purification Ratio]

Each of exhaust gas purifying devices obtained in examples and comparative examples is attached to an exhaust system of a car on which a direct injection type gasoline engine having a displacement of 2.0 liters is mounted. Afterward, as a vehicle test by a chassis dynamo, emissions of carbon monoxide, hydrocarbon and nitrogen oxide in an exhaust gas during an operation performed on operation conditions of European regulation operation mode are measured to obtain an emission value. The obtained emission value is compared with European Euro5 regulation value. When the emissions of all components (carbon monoxide, hydrocarbon and nitrogen oxide) are below the regulation value, the emissions are regarded as acceptable 'A'. When the emissions are not below the regulation value, the emissions are regarded as unacceptable 'B'. It is to be noted that the present evaluation is shown in 'the purification ratio (CO, HC and NOx)' of Table 3.

### [Measuring Method of PM Number Emission]

Each of the exhaust gas purifying devices obtained in the examples and comparative examples is attached to the exhaust system of the car on which the direct injection type gasoline engine having a displacement of 2.0 liters is mounted. Afterward, as the vehicle test by the chassis dynamo, the number of particles of PM in the exhaust gas discharged during the operation performed on the operation conditions of the European regulation operation mode is measured by a method according to European Euro6 regulation scheme. It is to be noted that when the number of the discharged particles of the PM is 6×10¹¹ particles/km or less, the conditions of the European Euro6 regulation scheme are satisfied. It is to be noted that the present evaluation is shown in 'PM discharge (particles/km)' of Table 3.

### [Measuring Method of Pressure Drop]

In an engine bench test of the direct injection type gasoline engine having a displacement of 2.0 liters, first a flow through type honeycomb structure having a cell density of 93 cells/cm², a partition wall thickness (a rib thickness) of 0.076 mm, a diameter of 105.7 mm and a length of 114 mm in a longitudinal direction is attached to the exhaust system of the engine. At this time, a pressure drop during an engine full load operation is measured as a reference value. On the other hand, after attaching each of the obtained exhaust gas purifying devices, the pressure drop is measured on engine full load conditions similar to the above conditions. Afterward, when an increase of the pressure drop is less than 10 kPa with respect to the above reference value, the result is regarded as acceptable 'A'. When the increase of the pressure drop is 10 kPa or more, the result is regarded as unacceptable 'B'. It is to be noted that the present evaluation is shown in 'the pressure drop' of Table 3.

### [Evaluation Method of General Judgment]

Among the above evaluations of [purification ratio], [PM number emission] and [pressure drop], when all the evaluations were regarded as acceptable 'A' (with the proviso that as to [PM number emission], when the number of the discharged particles of the PM was 6×10¹¹ particles/km or less), the result was regarded as acceptable 'A'. When even one of the evaluations is regarded as unacceptable 'B' (with the proviso that as to [PM number emission], when the number of the discharged particles of the PM exceeded 6×10¹¹ particles/km), the result was regarded as unacceptable 'B'.

**[Table 1]**

| | First one-side-plugged honeycomb structure | | | | | | | | | | | | |
|---|---|---|---|---|---|---|---|---|---|---|---|---|---|
| | Diameter (mm) | Length (mm) | L/D | Cell density (cells/cm²) | Rib thickness (mm) | Porosity (%) | Pore diameter (µm) | Plugged portion arrangement shape | Inflow side region | | | Outflow side region | |
| | | | | | | | | | Length ratio (%) | Catalyst load amount (g/L) | Noble metal amount (g/L) | Catalyst load amount (g/L) | Noble metal amount (g/L) |
| Example 1 | 110 | 80 | 0.7 | 62.0 | 0.076 | 38.0 | 8 | Alternate | 15 | 400 | 3 | 0 | 0 |
| Example 2 | 110 | 120 | 1.1 | 62.0 | 0.076 | 40.0 | 10 | Alternate | 20 | 300 | 2 | 0 | 0 |
| Example 3 | 110 | 165 | 1.5 | 93.0 | 0.051 | 42.0 | 12 | Alternate | 40 | 300 | 2 | 20 | 0.3 |
| Example 4 | 110 | 80 | 0.7 | 93.0 | 0.076 | 50.0 | 20 | 4-cells alternate | 40 | 200 | 1 | 20 | 0.3 |
| Example 5 | 110 | 120 | 1.1 | 139.5 | 0.051 | 65.0 | 35 | 4-cells alternate | 40 | 200 | 1 | 20 | 0.3 |
| Example 6 | 110 | 165 | 1.5 | 186.0 | 0.051 | 65.0 | 38 | 4-cells alternate | 40 | 200 | 1 | 50 | 0.3 |
| Example 7 | 110 | 80 | 0.7 | 62.0 | 0.076 | 38.0 | 8 | Alternate | 15 | 400 | 3 | 0 | 0.4 |
| Example 8 | 110 | 120 | 1.1 | 62.0 | 0.076 | 40.0 | 10 | Alternate | 40 | 300 | 2 | 0 | 0.4 |
| Example 9 | 110 | 165 | 1.5 | 93.0 | 0.051 | 42.0 | 12 | Alternate | 40 | 200 | 1 | 20 | 0.4 |
| Example 10 | 110 | 80 | 0.7 | 93.0 | 0.051 | 50.0 | 20 | 4-cells alternate | 40 | 200 | 1 | 20 | 0.4 |
| Example 11 | 110 | 120 | 1.1 | 139.5 | 0.051 | 65.0 | 35 | 4-cells alternate | 55 | 200 | 1 | 50 | 0.4 |
| Example 12 | 110 | 165 | 1.5 | 186.0 | 0.051 | 65.0 | 38 | 4-cells alternate | 65 | 200 | 1 | 50 | 0.4 |
| Example 13 | 110 | 80 | 0.7 | 62.0 | 0.076 | 38.0 | 8 | Alternate | 10 | 400 | 3 | 0 | 0.4 |
| Example 14 | 110 | 120 | 1.1 | 62.0 | 0.076 | 40.0 | 10 | Alternate | 40 | 300 | 2 | 0 | 0.4 |
| Example 15 | 110 | 165 | 1.5 | 93.0 | 0.051 | 42.0 | 12 | Alternate | 40 | 200 | 1 | 20 | 0.4 |
| Example 16 | 110 | 80 | 0.7 | 93.0 | 0.051 | 50.0 | 20 | 4-cells alternate | 40 | 200 | 1 | 20 | 0.4 |
| Example 17 | 110 | 120 | 1.1 | 139.5 | 0.051 | 65.0 | 35 | 4-cells alternate | 55 | 200 | 1 | 50 | 0.4 |
| Example 18 | 110 | 165 | 1.5 | 186.0 | 0.051 | 65.0 | 38 | 4-cells alternate | 70 | 200 | 1 | 50 | 0.4 |
| Example 19 | 110 | 80 | 0.7 | 62.0 | 0.076 | 38.0 | 8 | Alternate | 15 | 400 | 3 | 0 | 0.3 |
| Example 20 | 110 | 120 | 1.1 | 62.0 | 0.076 | 40.0 | 10 | Alternate | 40 | 300 | 2 | 0 | 0.3 |
| Example 21 | 110 | 165 | 1.5 | 93.0 | 0.051 | 42.0 | 12 | Alternate | 40 | 200 | 1 | 20 | 0.3 |
| Example 22 | 110 | 80 | 0.7 | 93.0 | 0.051 | 50.0 | 20 | 4-cells alternate | 55 | 200 | 1 | 20 | 0.3 |
| Example 23 | 110 | 120 | 1.1 | 139.5 | 0.051 | 65.0 | 35 | 4-cells alternate | 55 | 200 | 1 | 20 | 0.3 |
| Example 24 | 110 | 165 | 1.5 | 186.0 | 0.051 | 65.0 | 38 | 4-cells alternate | 55 | 200 | 1 | 50 | 0.3 |
| Example 25 | 110 | 165 | 1.5 | 186.0 | 0.051 | 65.0 | 50 | 4-cells alternate | 65 | 200 | 1 | 50 | 0.3 |
| Example 26 | 110 | 80 | 0.7 | 93.0 | 0.076 | 50.0 | 20 | Every other row | 40 | 200 | 1 | 50 | 0.3 |
| Example 27 | 110 | 80 | 0.7 | 93.0 | 0.076 | 50.0 | 20 | Every other row | 40 | 200 | 1 | 50 | 0.3 |
| Comparative Example 1 | 110 | 120 | 1.1 | 62.0 | 0.076 | 40.0 | 10 | Alternate | 0 | 300 | 2 | 0 | 0.4 |
| Comparative Example 2 | 110 | 120 | 1.1 | 62.0 | 0.076 | 40.0 | 10 | Alternate | 5 | 300 | 2 | 0 | 0.4 |
| Comparative Example 3 | 110 | 120 | 1.1 | 62.0 | 0.076 | 40.0 | 10 | Alternate | 75 | 300 | 2 | 0 | 0.4 |
| Comparative Example 4 | 110 | 80 | 0.7 | 62.0 | 0.076 | 38.0 | 8 | Alternate | 15 | 400 | 3 | 0 | 0.3 |

**[Table 2]**

| | Second one-side-plugged honeycomb structure | | | | | | | | | |
|---|---|---|---|---|---|---|---|---|---|---|
| | Diameter | Length | L/D | Cell density | Rib thickness | Porosity | Pore diameter | Plugged portion arrangement shape | Catalyst load amount | Noble metal amount |
| | (mm) | (mm) | | (cells/cm²) | (mm) | (%) | (µm) | | (g/L) | (g/L) |
| Example 1 | 110 | 20 | 0.18 | 62.0 | 0.076 | 42.0 | 4 | Alternate | 0 | 0 |
| Example 2 | 110 | 60 | 0.55 | 62.0 | 0.102 | 40.0 | 4 | Alternate | 0 | 0 |
| Example 3 | 110 | 60 | 0.55 | 62.0 | 0.051 | 42.0 | 4 | Alternate | 0 | 0 |
| Example 4 | 110 | 60 | 0.55 | 93.0 | 0.076 | 50.0 | 4 | 4-cells alternate | 15 | 0.2 |
| Example 5 | 110 | 80 | 0.73 | 93.0 | 0.051 | 65.0 | 4 | 4-cells alternate | 15 | 0.2 |
| Example 6 | 110 | 80 | 0.73 | 186.0 | 0.051 | 65.0 | 4 | 4-cells alternate | 15 | 0.2 |
| Example 7 | 110 | 20 | 0.18 | 62.0 | 0.076 | 42.0 | 4 | Alternate | 0 | 0 |
| Example 8 | 110 | 30 | 0.27 | 62.0 | 0.102 | 40.0 | 4 | Alternate | 0 | 0 |
| Example 9 | 110 | 40 | 0.36 | 62.0 | 0.051 | 42.0 | 4 | Alternate | 15 | 0.2 |
| Example 10 | 110 | 40 | 0.36 | 93.0 | 0.076 | 50.0 | 4 | Alternate | 15 | 0.2 |
| Example 11 | 110 | 40 | 0.36 | 93.0 | 0.051 | 65.0 | 4 | 4-cells alternate | 15 | 0.2 |
| Example 12 | 110 | 90 | 0.82 | 186.0 | 0.051 | 65.0 | 4 | 4-cells alternate | 15 | 0.2 |
| Example 13 | 110 | 20 | 0.18 | 62.0 | 0.076 | 42.0 | 4 | Alternate | 0 | 0 |
| Example 14 | 110 | 30 | 0.27 | 62.0 | 0.102 | 40.0 | 4 | Alternate | 0 | 0 |
| Example 15 | 110 | 40 | 0.36 | 62.0 | 0.051 | 42.0 | 4 | Alternate | 15 | 0.2 |
| Example 16 | 110 | 40 | 0.36 | 93.0 | 0.076 | 50.0 | 4 | Alternate | 15 | 0.2 |
| Example 17 | 110 | 40 | 0.36 | 93.0 | 0.051 | 65.0 | 4 | 4-cells alternate | 15 | 0.2 |
| Example 18 | 110 | 80 | 0.73 | 186.0 | 0.051 | 65.0 | 4 | 4-cells alternate | 15 | 0.2 |
| Example 19 | 110 | 20 | 0.18 | 62.0 | 0.076 | 42.0 | 4 | Alternate | 0 | 0 |
| Example 20 | 110 | 30 | 0.27 | 62.0 | 0.102 | 40.0 | 4 | Alternate | 0 | 0 |
| Example 21 | 110 | 40 | 0.36 | 62.0 | 0.051 | 42.0 | 4 | Alternate | 15 | 0.2 |
| Example 22 | 110 | 40 | 0.36 | 93.0 | 0.076 | 50.0 | 4 | Alternate | 15 | 0.2 |
| Example 23 | 110 | 40 | 0.36 | 93.0 | 0.051 | 65.0 | 4 | 4-cells alternate | 15 | 0.2 |
| Example 24 | 110 | 40 | 0.36 | 186.0 | 0.051 | 65.0 | 4 | 4-cells alternate | 15 | 0.2 |
| Example 25 | 110 | 110 | 1.00 | 186.0 | 0.051 | 65.0 | 4 | 4-cells alternate | 15 | 0.2 |
| Example 26 | 90 | 40 | 0.44 | 93.0 | 0.076 | 50.0 | 4 | Alternate | 15 | 0.2 |
| Example 27 | 70 | 40 | 0.57 | 93.0 | 0.076 | 50.0 | 4 | Every other row | 15 | 0.2 |
| Comparative Example 1 | 110 | 30 | 0.27 | 62.0 | 0.102 | 40.0 | 4 | Alternate | 0 | 0 |
| Comparative Example 2 | 110 | 30 | 0.27 | 62.0 | 0.102 | 40.0 | 4 | Alternate | 0 | 0 |
| Comparative Example 3 | 110 | 30 | 0.27 | 62.0 | 0.102 | 40.0 | 4 | Alternate | 0 | 0 |
| Comparative Example 4 | 110 | 20 | 0.18 | 62.0 | 0.076 | 42.0 | 4 | Alternate | 0 | 0 |

**[Table 3]**

| | Length ratio value | Connection method | Purification ratio (CO,HC,NOx) | PM discharge (particles/km) | Pressure drop | General judgment |
|---|---|---|---|---|---|---|
| Example 1 | 0.25 | Same can | A | 6×10¹¹ | A | A |
| Example 2 | 0.50 | Same can | A | 4×10¹¹ | A | A |
| Example 3 | 0.36 | Same can | A | 3×10¹¹ | A | A |
| Example 4 | 0.75 | Same can | A | 1×10¹¹ | A | A |
| Example 5 | 0.67 | Same can | A | 1×10¹¹ | A | A |
| Example 6 | 0.48 | Same can | A | 1×10¹¹ | A | A |
| Example 7 | 0.25 | Same can | A | 6×10¹¹ | A | A |
| Example 8 | 0.25 | Same can | A | 4×10¹¹ | A | A |
| Example 9 | 0.24 | Same can | A | 3×10¹¹ | A | A |
| Example 10 | 0.50 | Same can | A | 4×10¹¹ | A | A |
| Example 11 | 0.33 | Same can | A | 1×10¹¹ | A | A |
| Example 12 | 0.55 | Same can | A | 1×10¹¹ | A | A |
| Example 13 | 0.25 | Same can | A | 5×10¹¹ | A | A |
| Example 14 | 0.25 | Same can | A | 5×10¹¹ | A | A |
| Example 15 | 0.24 | Same can | A | 3×10¹¹ | A | A |
| Example 16 | 0.50 | Same can | A | 3×10¹¹ | A | A |
| Example 17 | 0.33 | Same can | A | 1×10¹¹ | A | A |
| Example 18 | 0.48 | Same can | A | 1×10¹¹ | A | A |
| Example 19 | 0.25 | Same can | A | 5×10¹¹ | A | A |
| Example 20 | 0.25 | Same can | A | 5×10¹¹ | A | A |
| Example 21 | 0.24 | Same can | A | 3×10¹¹ | A | A |
| Example 22 | 0.50 | Same can | A | 3×10¹¹ | A | A |
| Example 23 | 0.33 | Same can | A | 1×10¹¹ | A | A |
| Example 24 | 0.24 | Same can | A | 1×10¹¹ | A | A |
| Example 25 | 0.67 | Same can | A | 1×10¹¹ | A | A |
| Example 26 | 0.50 | Same can | A | 2×10¹¹ | A | A |
| Example 27 | 0.50 | Same can | A | 2×10¹¹ | A | A |
| Comparative Example 1 | 0.25 | Same can | B | 1×10¹¹ | A | B |
| Comparative Example 2 | 0.25 | Same can | B | 1×10¹¹ | A | B |
| Comparative Example 3 | 0.25 | Same can | A | 8×10¹¹ | B | B |
| Comparative Example 4 | 0.25 | Pipe connection | B | 1×10¹¹ | B | B |

### (Examples 2 to 27 and Comparative Examples 1 to 4)

First one-side-plugged honeycomb structures were obtained in the same manner as in Example 1 except that diameters, lengths, L/D, cell densities, rib thicknesses, porosities, average pore diameters, plugged portion arrangement shapes, length ratios, catalyst load amounts in inflow side regions, noble metal amounts in the inflow side regions, catalyst load amounts in outflow side regions and noble metal amounts in the outflow side regions were set as shown in Table 1. Moreover, second one-side-plugged honeycomb structures were obtained in the same manner as in Example 1 except that diameters, lengths, L/D, cell densities, rib thicknesses, porosities, average pore diameters, plugged portion arrangement shapes, length ratios, catalyst load amounts in inflow side regions, noble metal amounts in the inflow side regions, catalyst load amounts in outflow side regions and noble metal amounts in the outflow side regions were set as shown in Table 2. Afterward, exhaust gas purifying devices (the exhaust gas purifying devices of Examples 2 to 27 and Comparative Examples 1 to 4) were prepared in the same manner as in Example 1. As to the prepared exhaust gas purifying devices, 'purification ratio', 'PM number emission', 'pressure drop' and 'general judgment' were evaluated by the above methods in the same manner as in Example 1. Results are shown in Table 3.

As apparent from Table 3, it can be confirmed that the exhaust gas purifying devices of Examples 1 to 27 can efficiently remove fine particles in an exhaust gas discharged from a direct injection type gasoline engine, have a less increase of pressure drop, and can purify the exhaust gas containing CO, HC and NOx with a high efficiency immediately after the start of the engine, as compared with the exhaust gas purifying devices of Comparative Examples 1 to 4.

An exhaust gas purifying device of the present invention can be used suitably for purification of an exhaust gas discharged from a direct injection gasoline engine.

### Description of Reference Numerals

2: first inflow side end face, 3: first outflow side end face, 4 and 14: cell, 4a and 14a: cells in a part, 4b and 14b: remaining cells, 5 and 15: partition wall, 6: first honeycomb base material, 8: first plugged portion, 10, 40, 50 and 60: first one-side-plugged honeycomb structure, 12: second inflow side end face, 13: second outflow side end face, 16: second honeycomb base material, 18: second plugged honeycomb structure, 20: second one-side-plugged honeycomb structure, 22: inflow port, 23: outflow port, 30: can member, 31: inflow side region, 32: outflow side region, 34: unit cell group, 40: cushion material, 42: partition plate, 100: exhaust gas purifying device, G₁: exhaust gas, and G₂: purified exhaust gas.

## Claims

1. An exhaust gas purifying device comprising:
a first one-side-plugged honeycomb structure (10, 40, 50, 60) including a first honeycomb base material (6) having porous partition walls (5) arranged to form a plurality of cells (4) which extend through the first honeycomb base material from a first inflow side end face (2) to a first outflow side end face (3) and become through channels of a fluid, first plugged portions (8) arranged to plug open frontal areas of cells in a part of the first outflow side end face (3) of the first honeycomb base material, and a three way catalyst loaded onto the first honeycomb base material, all the cells in the first inflow side end face (2) being opened;
a second one-side-plugged honeycomb structure (20) including a second honeycomb base material (16) having porous partition walls arranged to form a plurality of cells which extend through the second honeycomb base material from a second inflow side end face (12) to a second outflow side end face (13) and become through channels of the fluid, and second plugged portions (18) arranged to plug open frontal areas of cells in a part of the second outflow side end face (13) of the second honeycomb base material, all the cells in the second inflow side end face being opened; and
a can member (30) containing the first one-side-plugged honeycomb structure (10, 40, 50, 60) and the second one-side-plugged honeycomb structure (20) and having an inflow port (22) through which an exhaust gas flows into the can member and an outflow port (23) through which the purified exhaust gas flows out of the can member,
wherein the first one-side-plugged honeycomb structure (10, 40, 50, 60) is disposed in the can member (30) on an inflow port side thereof so that the first inflow side end face (2) faces the inflow port side of the can member, the second one-side-plugged honeycomb structure (20) is disposed in the can member on an outflow port side thereof so that the second outflow side end face (13) faces the outflow port side of the can member,
the first one-side-plugged honeycomb structure (10, 40, 50, 60) includes two regions in the form of an inflow side region (31) which is a region on an inflow side of the fluid and an outflow side region (32) which is a region on an outflow side of the fluid, and
the inflow side region (31) of the first one-side-plugged honeycomb structure is in a range from the first inflow side end face (2) to a position where a distance from the first inflow side end face is from 10 to 70% of the length of the first one-side-plugged honeycomb structure along a central axis direction, and the three way catalyst is loaded onto the partition walls in the inflow side region, and either (i) no catalyst is loaded onto the outflow side region (32) and the second one-side-plugged honeycomb structure (20) or (ii) a catalyst is loaded onto the outflow side region (32) and/or the second one-side-plugged honeycomb structure (20) and the amount of the catalyst loaded onto the outflow side region and the second one-side-plugged honeycomb structure per unit volume is smaller than the amount of the three way catalyst loaded per unit volume of the partition walls in the inflow side region.

2. The exhaust gas purifying device according to claim 1, wherein the amount of the three way catalyst loaded per unit volume of the inflow side region (31) of the first one-side-plugged honeycomb structure is from 100 to 400 g/L.

3. The exhaust gas purifying device according to claim 1 or 2, wherein the amount of the catalyst loaded per unit volume onto the outflow side region (32) of the first one-side-plugged honeycomb structure and the second one-side-plugged honeycomb structure (20) is 60 g/L or less.

4. The exhaust gas purifying device according to any one of claims 1 to 3, wherein in the first honeycomb base material (6) of the first one-side-plugged honeycomb structure, the thickness of the partition walls is from 50.8 to 254 µm, the cell density is from 32 to 186 cells/cm², the porosity of the partition walls is from 35 to 70%, and the value of a ratio of a length L₁ along the central axis direction with respect to a diameter D₁ of the first inflow side end face (2) is from 0.5 to 1.5.

5. The exhaust gas purifying device according to any one of claims 1 to 4, wherein in the second honeycomb base material (16) of the second one-side-plugged honeycomb structure (20), the thickness of the partition walls is from 50.8 to 254 µm, the cell density is from 32 to 186 cells/cm², the porosity of the partition walls is from 35 to 70%, and the value of a ratio of a length L₂ along the central axis direction with respect to a diameter D₂ of the second inflow side end face is from 0.1 to 1.0.

6. The exhaust gas purifying device according to any one of claims 1 to 5, wherein the distance between the first one-side-plugged honeycomb structure (10, 40, 50, 60) and the second one-side-plugged honeycomb structure (20) is from 1 to 20 mm.

7. The exhaust gas purifying device according to any one of claims 1 to 6, wherein the first plugged portions (8) of the first one-side-plugged honeycomb structure are arranged to alternately plug adjacent cells, or when a cell group (34) constituted of a plurality of adjacent cells is a unit cell group, the first plugged portions (8) are arranged to alternately plug adjacent unit cell groups.

8. The exhaust gas purifying device according to any one of claims 1 to 7, wherein the second plugged portions (18) of the second one-side-plugged honeycomb structure are arranged to alternately plug adjacent cells, or when a cell group constituted of a plurality of adjacent cells is a unit cell group, the second plugged portions (18) are arranged to alternately plug adjacent unit cell groups.

## Patentansprüche

1. Abgasreinigungsvorrichtung, die Folgendes umfasst:
eine erste, an einer Seite verschlossene Wabenstruktur (10, 40, 50, 60), die Folgendes aufweist: ein erstes Wabengrundmaterial (6) mit porösen Trennwänden (5), die angeordnet sind, um eine Vielzahl an Zellen (4) zu bilden, die sich durch das erste Wabengrundmaterial von einer ersten Endfläche (2) an einer Einströmseite zu einer ersten Endfläche (3) an einer Ausströmseite erstrecken und Durchlasskanäle für ein Fluid werden; erste Verschlussabschnitte (8), die angeordnet sind, um offene Stirnbereiche der Zellen in einem Teil der ersten Endfläche (3) der Ausströmseite des ersten Wabenbasismaterials zu verschließen, und einen Drei-Wege-Katalysator, der auf das erste Wabengrundmaterial geladen ist, wobei alle Zellen an der ersten Endfläche (2) an der Einströmseite offen sind;
eine zweite, an einer Seite verschlossene Wabenstruktur (20), die Folgendes aufweist: ein zweites Wabengrundmaterial (16) mit porösen Trennwänden, die angeordnet sind, um eine Vielzahl an Zellen zu bilden, die sich durch das zweite Wabengrundmaterial von einer zweiten Endfläche (12) an einer Einströmseite zu einer zweiten Endfläche (13) an einer Ausströmseite erstrecken und Durchlasskanäle für ein Fluid werden; und zweite Verschlussabschnitte (18), die angeordnet sind, um offene Stirnbereiche der Zellen in einem Teil der zweiten Endfläche (13) der Ausströmseite des zweiten Wabenbasismaterials zu verschließen, wobei alle Zellen an der zweiten Endfläche an der Einströmseite offen sind;
ein Hüllenelement (30), das die erste, an einer Seite verschlossene Wabenstruktur (10, 40, 50, 60) und die zweite, an einer Seite verschlossene Wabenstruktur (20) enthält und eine Einströmöffnung (22), durch die ein Abgas in das Hüllenelement einströmt, und eine Ausströmöffnung (23) aufweist, durch die gereinigtes Abgas aus dem Hüllenelement ausströmt,
wobei die erste, an einer Seite verschlossene Wabenstruktur (10, 40, 50, 60) in dem Hüllenelement (30) an der Seite der Einströmöffnung angeordnet ist, so dass die erste Endfläche (2) an der Einströmseite der Seite der Einströmöffnung des Hüllenelements zugewandt ist, die zweite, an einer Seite verschlossene Wabenstruktur (20) in dem Hüllenelement an der Seite der Ausströmöffnung angeordnet ist, so dass die zweite Endfläche (13) an der Ausströmseite der Seite der Ausströmöffnung des Hüllenelements zugewandt ist,
die erste, an einer Seite verschlossene Wabenstruktur (10, 40, 50, 60) zwei Bereiche in Form eines Einströmseitenbereichs (31), der ein Bereich an der Einströmseite des Fluids ist, und eines Ausströmseitenbereichs (32) umfasst, der ein Bereich an der Ausströmseite des Fluids ist, und
der Einströmseitenbereich (31) der ersten, an einer Seite verschlossenen Wabenstruktur im Bereich von der ersten Endfläche (2) an der Einströmseite zu einer Stelle vorliegt, wo der Abstand von der ersten Endfläche an der Einströmseite 10 bis 70 % der Länge der ersten, an einer Seite verschlossenen Wabenstruktur entlang der Mittelachsenrichtung beträgt, und der Drei-Wege-Katalysator auf die Trennwände in dem Einströmseitenbereich geladen ist, und entweder (i) kein Katalysator in dem Ausströmseitenbereich (32) und der zweiten, an einer Seite verschlossenen Wabenstruktur (20) aufgeladen ist oder (ii) ein Katalysator in dem Ausströmseitenbereich (32) und/oder der zweiten, an einer Seite verschlossenen Wabenstruktur (20) aufgeladen ist und die Menge des in dem Ausströmseitenbereich und der zweiten, an einer Seite verschlossenen Wabenstruktur aufgeladenen Katalysators pro Volumeneinheit geringer ist als die Menge des Drei-Wege-Katalysators, der pro Volumeneinheit der Trennwände in dem Einströmseitenbereich aufgeladen ist.

2. Abgasreinigungsvorrichtung nach Anspruch 1, worin die Menge an Drei-Wege-Katalysator, die pro Volumeneinheit des Einströmseitenbereichs (31) der ersten, an einer Seite verschlossenen Wabenstruktur aufgeladen ist, 100 bis 400 g/l beträgt.

3. Abgasreinigungsvorrichtung nach Anspruch 1 oder 2, worin die Menge an Katalysator, die pro Volumeneinheit des Ausströmseitenbereichs (32) der ersten, an einer Seite verschlossenen Wabenstruktur und der zweiten, an einer Seite verschlossenen Wabenstruktur (20) aufgeladen ist, 60 g/l oder weniger beträgt.

4. Abgasreinigungsvorrichtung nach einem der Ansprüche 1 bis 3, worin in dem ersten Wabengrundmaterial (6) der ersten, an einer Seite verschlossenen Wabenstruktur die Dicke der Trennwände 50,8 bis 254 µm, die Zelldichte 32 bis 186 Zellen/cm², die Porosität der Trennwände 35 bis 70 % und der Wert des Verhältnisses einer Länge L₁ entlang der Mittelachsenrichtung zu einem Durchmesser D₁ der ersten Endfläche (2) an der Einströmseite 0,5 bis 1,4 beträgt.

5. Abgasreinigungsvorrichtung nach einem der Ansprüche 1 bis 4, worin in dem zweiten Wabengrundmaterial (16) der zweiten, an einer Seite verschlossenen Wabenstruktur (20) die Dicke der Trennwände 50,8 bis 254 µm, die Zelldichte 32 bis 186 Zellen/cm², die Porosität der Trennwände 35 bis 70 % und der Wert des Verhältnisses einer Länge L₂ entlang der Mittelachsenrichtung zu einem Durchmesser D₂ der zweiten Endfläche an der Einströmseite 0,1 bis 1,0 beträgt.

6. Abgasreinigungsvorrichtung nach einem der Ansprüche 1 bis 5, worin der Abstand zwischen der ersten, an einer Seite verschlossenen Wabenstruktur (10, 40, 50, 60) und der zweiten, an einer Seite verschlossenen Wabenstruktur (20) 1 bis 20 mm beträgt.

7. Abgasreinigungsvorrichtung nach einem der Ansprüche 1 bis 6, worin die ersten Verschlussabschnitte (8) der ersten, an einer Seite verschlossenen Wabenstruktur angeordnet sind, um abwechselnd benachbarte Zellen zu verschließen, oder, wenn eine Zellgruppe (34) aus einer Vielzahl benachbarter Zellen, eine Zelleinheitsgruppe ist, sind die ersten Verschlussabschnitte (8) angeordnet, um benachbarte Zelleinheitsgruppen abwechselnd zu verschließen.

8. Abgasreinigungsvorrichtung nach einem der Ansprüche 1 bis 7, worin die zweiten Verschlussabschnitte (18) der zweiten, an einer Seite verschlossenen Wabenstruktur angeordnet sind, um abwechselnd benachbarte Zellen zu verschließen, oder, wenn eine Zellgruppe aus einer Vielzahl benachbarter Zellen, eine Zelleinheitsgruppe ist, sind die zweiten Verschlussabschnitte (18) angeordnet, um benachbarte µZelleinheitsgruppen abwechselnd zu verschließen.

## Revendications

1. Dispositif de purification de gaz d'échappement comprenant :
une première structure en nid d'abeilles obstruée d'un côté (10, 40, 50, 60) comprenant un premier matériau de base en nid d'abeilles (6) comportant des parois de séparation poreuses (5) agencées pour former une pluralité de cellules (4) qui s'étendent à travers le premier matériau de base en nid d'abeilles d'une première face d'extrémité côté flux d'entrée (2) jusqu'à une première face d'extrémité côté flux de sortie (3) et qui deviennent des canaux traversants d'un fluide, des premières parties obstruées (8) agencées pour obstruer les zones frontales ouvertes de cellules dans une partie de la première face d'extrémité côté flux de sortie (3) du premier matériau de base en nid d'abeilles, et un catalyseur à trois fonctions chargé sur le premier matériau de base en nid d'abeilles, toutes les cellules dans la première face d'extrémité côté flux d'entrée (2) étant ouvertes ;
une deuxième structure en nid d'abeilles obstruée d'un côté (20) comprenant un deuxième matériau de base en nid d'abeilles (16) comportant des parois de séparation poreuses agencées pour former une pluralité de cellules qui s'étendent à travers le deuxième matériau de base en nid d'abeilles d'une deuxième face d'extrémité côté flux d'entrée (12) jusqu'à une deuxième face d'extrémité côté flux de sortie (13) et qui deviennent des canaux traversants du fluide, et des deuxièmes parties obstruées (18) agencées pour obstruer les zones frontales ouvertes de cellules dans une partie de la deuxième face d'extrémité côté flux de sortie (13) du deuxième matériau de base en nid d'abeilles, toutes les cellules dans la deuxième face d'extrémité côté flux d'entrée étant ouvertes ; et
un élément formant réservoir (30) contenant la première structure en nid d'abeilles obstruée d'un côté (10, 40, 50, 60) et la deuxième structure en nid d'abeilles obstruée d'un côté (20) et comportant un orifice de flux d'entrée (22) à travers lequel un gaz d'échappement s'écoule dans l'élément formant réservoir et un orifice de flux de sortie (23) à travers lequel le gaz d'échappement purifié s'écoule hors de l'élément formant réservoir,
dans lequel la première structure en nid d'abeilles obstruée d'un côté (10, 40, 50, 60) est disposée dans l'élément formant réservoir (30) d'un côté d'orifice de flux d'entrée de celui-ci de sorte que la première face d'extrémité côté flux d'entrée (2) soit face au côté d'orifice de flux d'entrée de l'élément formant réservoir, la deuxième structure en nid d'abeilles obstruée d'un côté (20) est disposée dans l'élément formant réservoir d'un côté d'orifice de flux de sortie de celui-ci de sorte que la deuxième face d'extrémité côté flux de sortie (13) soit face au côté d'orifice de flux de sortie de l'élément formant réservoir,
la première structure en nid d'abeilles obstruée d'un côté (10, 40, 50, 60) comprend deux régions sous la forme d'une région côté flux d'entrée (31) qui est une région d'un côté flux d'entrée du fluide et d'une région côté flux de sortie (32) qui est une région d'un côté flux de sortie du fluide, et
la région côté flux d'entrée (31) de la première structure en nid d'abeilles obstruée d'un côté est dans une plage de la première face d'extrémité côté flux d'entrée (2) jusqu'à une position à laquelle une distance par rapport à la première face d'extrémité côté flux d'entrée est de 10 à 70 % de la longueur de la première structure en nid d'abeilles obstruée d'un côté le long d'une direction d'axe central, et le catalyseur à trois fonctions est chargé sur les parois de séparation dans la région côté flux d'entrée, et soit (i) aucun catalyseur n'est chargé dans la région côté flux de sortie (32) et la deuxième structure en nid d'abeilles obstruée d'un côté (20), soit (ii) un catalyseur est chargé dans la région côté flux de sortie (32) et/ou la deuxième structure en nid d'abeilles obstruée d'un côté (20) et la quantité de catalyseur chargée dans la région côté flux de sortie et la deuxième structure en nid d'abeilles obstruée d'un côté par volume unitaire est inférieure à la quantité de catalyseur à trois fonctions chargé par volume unitaire des parois de séparation dans la région côté flux d'entrée.

2. Dispositif de purification de gaz d'échappement selon la revendication 1, dans lequel la quantité de catalyseur à trois fonctions chargée par volume unitaire de la région côté flux d'entrée (31) de la première structure en nid d'abeilles obstruée d'un côté est de 100 à 400 g/l.

3. Dispositif de purification de gaz d'échappement selon la revendication 1 ou 2, dans lequel la quantité de catalyseur chargée par volume unitaire dans la région côté flux de sortie (32) de la première structure en nid d'abeilles obstruée d'un côté et la deuxième structure en nid d'abeilles obstruée d'un côté (20) est de 60 g/l ou moins.

4. Dispositif de purification de gaz d'échappement selon l'une quelconque des revendications 1 à 3, dans lequel, dans le premier matériau de base en nid d'abeilles (6) de la première structure en nid d'abeilles obstruée d'un côté, l'épaisseur des parois de séparation est de 50,8 à 254 µm, la densité de cellules est de 32 à 186 cellules/cm², la porosité des parois de séparation est de 35 à 70 %, et la valeur d'un rapport entre une longueur L₁ le long de la direction d'axe central et un diamètre D₁ de la première face d'extrémité côté flux d'entrée (2) est de 0,5 à 1,5.

5. Dispositif de purification de gaz d'échappement selon l'une quelconque des revendications 1 à 4, dans lequel, dans le deuxième matériau de base en nid d'abeilles (16) de la deuxième structure en nid d'abeilles obstruée d'un côté (20), l'épaisseur des parois de séparation est de 50,8 à 254 µm, la densité de cellules est de 32 à 186 cellules/cm², la porosité des parois de séparation est de 35 à 70 %, et la valeur d'un rapport entre une longueur L₂ le long de la direction d'axe central et un diamètre D₂ de la deuxième face d'extrémité côté flux d'entrée est de 0,1 à 1,0.

6. Dispositif de purification de gaz d'échappement selon l'une quelconque des revendications 1 à 5, dans lequel la distance entre la première structure en nid d'abeilles obstruée d'un côté (10, 40, 50, 60) et la deuxième structure en nid d'abeilles obstruée d'un côté (20) est de 1 à 20 mm.

7. Dispositif de purification de gaz d'échappement selon l'une quelconque des revendications 1 à 6, dans lequel les premières parties obstruées (8) de la première structure en nid d'abeilles obstruée d'un côté sont agencées pour obstruer alternativement des cellules contiguës, ou lorsqu'un groupe de cellules (34) constitué d'une pluralité de cellules contiguës est un groupe de cellules unitaires, les premières parties obstruées (8) sont agencées pour obstruer alternativement des groupes de cellules unitaires contigus.

8. Dispositif de purification de gaz d'échappement selon l'une quelconque des revendications 1 à 7, dans lequel les deuxièmes parties obstruées (18) de la deuxième structure en nid d'abeilles obstruée d'un côté sont agencées pour obstruer alternativement des cellules contiguës, ou lorsqu'un groupe de cellule constitué d'une pluralité de cellules contiguës est un groupe de cellules unitaires, les deuxièmes parties obstruées (18) sont agencées pour obstruer alternativement des groupes de cellules unitaires contigus.
